# EUROPEAN PATENT APPLICATION

(11) **EP 4 827 144 A1**
(43) Date of publication of application: **21.10.2026**
(21) Application number: 23961533.9
(22) Date of filing: 15.12.2023
(51) Int. Cl.: H04W 16/28, H04W 56/00

(54) **TERMINAL, WIRELESS COMMUNICATION METHOD, AND BASE STATION**

(71) Applicant: NTT DOCOMO, INC., Tokyo 100-6150 (JP)
(72) Inventor: OKUMURA, Mamoru, Tokyo 100-6150 (JP); MATSUMURA, Yuki, Tokyo 100-6150 (JP); NAGATA, Satoshi, Tokyo 100-6150 (JP)
(74) Representative: Hoffmann Eitle
(86) International application number: PCT/JP2023/045088
(87) International publication number: WO 2025/126470

(57) **Abstract**

A terminal according to one aspect of the present disclosure includes a receiving section that receives configuration information relating to a cell with a changed physical range; and a control section that controls transmission and reception of a signal using the cell based on the configuration information. According to one aspect of the present disclosure, suitable power control of a network can be performed, and more flexible communication can be achieved.

## Description

### Technical Field

The present disclosure relates to a terminal, wireless communication method, and base station in a next-generation mobile communication system.

### Background Art

In a Universal Mobile Telecommunications System (UMTS) network, Long Term Evolution (LTE) has been specified for the purpose of achieving even higher data rates, lower latency, and the like (NPL 1). In addition, LTE-Advanced (3GPP Rel. 10 to 14) has been specified for the purpose of further increasing capacity and enhancing LTE (Third Generation Partnership Project; 3GPP (registered trademark) Release (Rel.) 8 and 9).

A successor system to LTE (also referred to as, for example, 5th generation mobile communication system (5G), 5G+ (plus), 6th generation mobile communication system (6G), New Radio (NR), and 3GPP Rel. 15 or later) is also being considered.

### Citation List

### Non Patent Literature

NPL 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010.

### Summary of Invention

### Technical Problem

In future wireless communication systems (e.g., Rel. 20 and later), it is being considered that a terminal (user terminal, user equipment (UE)) performs cell-free communication in which communication is performed using units smaller than conventional cells.

However, specific studies on cell-free communication are not yet sufficient. If such studies are insufficient, control of a network (NW) according to communication traffic or the like may be unlikely to be performed, and there is a concern that improvement in communication throughput may be suppressed.

Accordingly, the present disclosure is intended, among other things, to provide a terminal, a wireless communication method, and a base station capable of performing suitable power control in a network and enabling more flexible communication.

### Solution to Problem

A terminal according to one aspect of the present disclosure includes a receiving section that receives configuration information relating to a cell with a changed physical range; and a control section that controls transmission and reception of a signal using the cell based on the configuration information.

### Advantageous Effects of Invention

According to one aspect of the present disclosure, suitable power control of a network can be performed, and more flexible communication can be achieved.

### Brief Description of Drawings

[FIG. 1] Fig. 1 is a diagram illustrating an example of a beam failure recovery procedure in Rel. 15 NR.
[FIG. 2] Figs. 2A and 2B are diagrams illustrating an overview of MIMO.
[FIG. 3] Fig. 3A is a diagram illustrating an overview of a cellular system. Fig. 3B is a diagram illustrating an overview of a cell-free system.
[FIG. 4] Figs. 4A to 4C are diagrams illustrating examples of an overview of each assumed cell-free configuration.
[FIG. 5] Fig. 5 is a diagram illustrating an example of changes associated with modification of a second cell.
[FIG. 6] Fig. 6 is a diagram illustrating an example of a pattern of components (PCI components) of one PCI.
[FIG. 7] Figs. 7A to 7E are diagrams illustrating an example of a configuration of a first cell.
[FIG. 8] Fig. 8 is a diagram illustrating an example of a pattern of components (area components) of one area.
[FIG. 9] Fig. 9A is a diagram illustrating an example of a configuration of a first cell/second cell according to Option 1-1. Fig. 9B is a diagram illustrating an example of a configuration of a first cell/second cell according to Option 1-2.
[FIG. 10] Fig. 10A is a diagram illustrating an example of a configuration of a first cell/second cell according to Option 2/4-1. Fig. 10B is a diagram illustrating an example of a configuration of a first cell/second cell according to Option 2/4-2.
[FIG. 11] Fig. 11A is a diagram illustrating an example of a configuration of a first cell/second cell according to Option 3/5-1. Fig. 11B is a diagram illustrating an example of a configuration of a first cell/second cell according to Option 3/5-2.
[FIG. 12] Fig. 12 is a diagram illustrating an example of a change of a configuration of a second cell.
[FIG. 13] Figs. 13A to 13C are diagrams illustrating an example of a configuration of a second cell according to Option 0-3.
[FIG. 14] Figs. 14A and 14B are diagrams illustrating an example of a connection configuration using a second cell.
[FIG. 15] Fig. 15A is a diagram illustrating an example of a cell configuration of a first cell/second cell according to Embodiment 1. Fig. 15B is a diagram illustrating an example of switching between a first cell/second cell according to Embodiment 1.
[FIG. 16] Figs. 16A and 16B are diagrams illustrating an example of resource configuration according to Embodiment 2.
[FIG. 17] Fig. 17 is a diagram illustrating an example of a schematic configuration of a wireless communication system according to an embodiment.
[FIG. 18] Fig. 18 is a diagram illustrating an example of a configuration of a base station according to an embodiment.
[FIG. 19] Fig. 19 is a diagram illustrating an example of a configuration of a user terminal according to an embodiment.
[FIG. 20] Fig. 20 is a diagram illustrating an example of a hardware configuration of a base station and a user terminal according to an embodiment.
[FIG. 21] Fig. 21 is a diagram illustrating an example of a vehicle according to an embodiment.

### Description of Embodiments

### (Beam Failure Detection (BFD)/Beam Failure Recovery (BFR))

In NR, communication is performed using beamforming. For example, a UE and a network (NW, e.g., a base station (e.g., gNodeB (gNB))) may use a beam used for signal transmission (also referred to as a transmission beam, a Tx beam, or the like) and a beam used for signal reception (also referred to as a reception beam, an Rx beam, or the like).

When beamforming is used, radio link quality is likely to deteriorate because the radio link is more susceptible to disturbance caused by an obstacle. Due to deterioration of the radio link quality, a radio link failure (RLF) may frequently occur. When an RLF occurs, reconnection to a cell becomes necessary, and therefore frequent occurrence of RLF may lead to degradation of system throughput.

In NR, in order to suppress occurrence of RLF, when the quality of a certain beam deteriorates, a procedure for switching to another beam (which may also be referred to as beam recovery (BR), beam failure recovery (BFR), Layer 1/Layer 2 (L1/L2) beam recovery, or the like) is performed. Moreover, the BFR procedure may be simply referred to as BFR.

Moreover, in the present disclosure, a beam failure (BF) may also be referred to as a link failure.

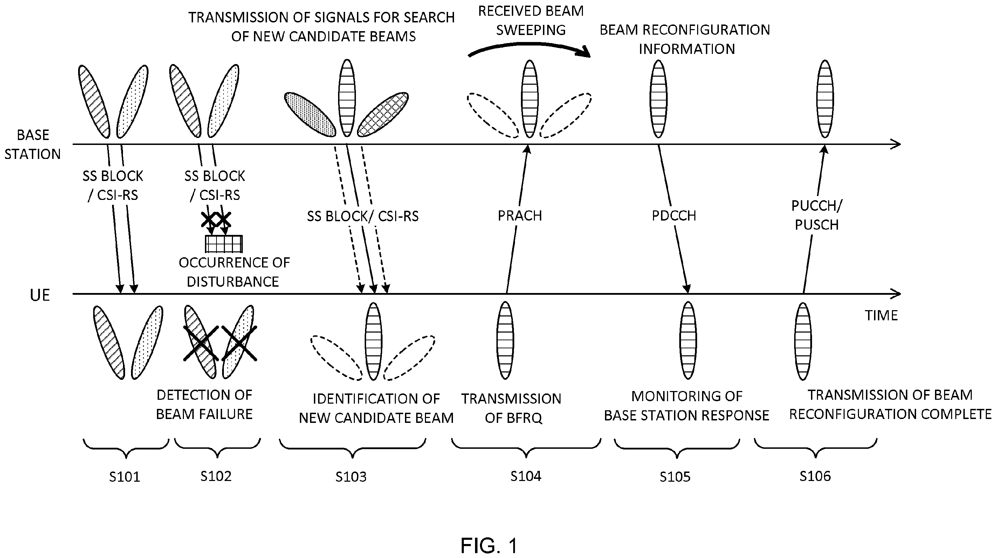

Fig. 1 is a diagram illustrating an example of a beam recovery procedure in Rel. 15 NR. The number of beams or the like is an example and is not limited thereto. In an initial state (step S101), the UE performs measurement based on reference signal (RS) resources transmitted using two beams.

The RS may be at least one of a Synchronization Signal Block (SSB) and a Channel State Information RS (CSI-RS) for channel state measurement. Moreover, the SSB may also be referred to as an SS/Physical Broadcast Channel (PBCH) block or the like.

The RS may be at least one of a Primary Synchronization Signal (PSS), a Secondary Synchronization Signal (SSS), a mobility reference signal (MRS), a signal included in an SSB, an SSB, a CSI-RS, a Demodulation Reference Signal (DMRS), a beam-dedicated signal, and the like, or may be a signal configured by extending, modifying, and the like these signals. The RS measured in step S101 may be referred to as a beam failure detection RS (BFD-RS), which is used for beam failure detection, a beam failure recovery RS (BFR-RS), which is used in a beam failure recovery procedure, or the like.

In step S102, due to radio waves from the base station being disturbed, the UE may be unable to detect the BFD-RS (or reception quality of the RS deteriorates). Such disturbance may occur due to, for example, obstacles between the UE and the base station, fading, interference, or the like.

The UE detects a beam failure when a given condition is satisfied. For example, when a block error rate (BLER) is less than a threshold for all the configured BFD-RSs (BFD-RS resource configuration), the UE may detect occurrence of a beam failure. When occurrence of a beam failure is detected, a lower layer (physical (PHY) layer) of the UE may notify (indicate) a beam failure instance to a higher layer (MAC layer).

Moreover, a criterion for determination is not limited to BLER, and may be Layer 1 reference signal received power (L1-RSRP) in the physical layer. Further, instead of the RS measurement or in addition to the RS measurement, beam failure detection may be performed based on a downlink control channel (Physical Downlink Control Channel (PDCCH)) or the like. The BFD-RS may be expected to be a quasi-co-location (QCL) with a DMRS of the PDCCH monitored by the UE.

Here, a QCL is an index indicating statistical properties of a channel. For example, when one signal/channel and another signal/channel are in a QCL relationship (or are quasi-co-located), it may be assumed that at least one of a Doppler shift, a Doppler spread, an average delay, a delay spread, and a spatial parameter (e.g., a spatial reception parameter (spatial Rx parameter)) is the same between the plurality of different signals/channels (i.e., they are QCL with respect to at least one of these).

Moreover, the spatial reception parameter may correspond to a reception beam (e.g., a received analog beam) of the UE, and a certain beam may be identified based on spatial QCL. In the present disclosure, QCL (or at least one element of QCL) may be used interchangeably with spatial QCL (sQCL).

Information relating to a BFD-RS (e.g., an index of the RS, a resource, the number of RSs, the number of ports, precoding, etc.), information relating to beam failure detection (BFD) (e.g., the above-described threshold), and the like may be configured (notified) to the UE using higher layer signaling or the like. The information relating to the BFD-RS may also be referred to as information relating to a BFR resource or the like.

The higher layer (e.g., MAC layer) of the UE may initiate a given timer (which may also be referred to as a beam failure detection timer) when receiving a beam failure instance notification from the PHY layer of the UE. If the MAC layer of the UE receives the beam failure instance notification a certain number of times (e.g., beamFailureInstanceMaxCount configured by RRC) or more before the timer expires, the MAC layer may trigger BFR (e.g., initiate any of the random access procedures described later).

The base station may determine that the UE detects a beam failure when there is no notification from the UE or when a given signal (a beam failure recovery request in step S104) is received from the UE.

In step S103, for beam failure recovery, the UE initiates a search for a new candidate beam to be newly used for communication. The UE may select a new candidate beam corresponding to a given RS by measuring the RS. The RS measured in step S103 may be referred to as a new candidate RS, a new candidate beam identification RS (NCBI-RS), an RS for new beam identification, an RS for new beam identification, a new beam identification RS (NBI-RS), a candidate beam Identification RS (CBI-RS), a candidate beam RS (CB-RS), or the like. The NBI-RS may be the same as or different from the BFD-RS. Moreover, the new candidate beam may be simply referred to as a candidate beam or a candidate RS.

The UE may determine a beam corresponding to an RS that satisfies a given condition as a new candidate beam. For example, the UE may determine a new candidate beam based on an RS, among configured NBI-RSs, for which the L1-RSRP exceeds a threshold. Moreover, the criterion for determination is not limited to the L1-RSRP. The L1-RSRP relating to an SSB may be referred to as SS-RSRP. The L1-RSRP relating to a CSI-RS may be referred to as CSI-RSRP.

Information relating to an NBI-RS (e.g., a resource of the RS, the number of RSs, the number of ports, precoding, etc.), information relating to new beam identification (NBI) (e.g., the above-described threshold), and the like may be configured (notified) to the UE using higher layer signaling or the like. Information relating to a new candidate RS (or NBI-RS) may be obtained based on information relating to a BFD-RS. The information relating to the NBI-RS may also be referred to as information relating to a resource for NBI or the like.

Moreover, the BFD-RS, the NBI-RS, and the like may be used interchangeably with a radio link monitoring reference signal (RLM-RS).

In step S104, the UE that identifies a certain new candidate beam transmits a beam failure recovery request (BFRQ). The beam failure recovery request may also be referred to as a beam failure recovery request signal, a beam fault recovery request signal, or the like.

The BFRQ may be transmitted using at least one of, for example, a Physical Uplink Control Channel (PUCCH), a Physical Random Access Channel (PRACH), a Physical Uplink Shared Channel (PUSCH), and a configured grant (CG) PUSCH.

The BFRQ may include information of the certain new candidate beam/new candidate RS identified in step S103. A resource for the BFRQ may be associated with the new candidate beam. The beam information may be notified using a beam index (BI), a port index of a given reference signal, an RS index, a resource index (e.g., a CSI-RS resource indicator (CRI), an SSB resource indicator (SSBRI)), or the like.

In Rel. 15 NR, contention-based BFR (CB-BFR), which is BFR based on a contention-based random access (RA) procedure, and contention-free BFR (CF-BFR), which is BFR based on a contention-free random access procedure, are being considered. In the CB-BFR and the CF-BFR, the UE may transmit a preamble (also referred to as an RA preamble, a physical random access channel (PRACH), a RACH preamble, or the like) as the BFRQ using a PRACH resource.

In the CB-BFR, the UE may transmit a preamble randomly selected from one or more preambles. On the other hand, in the CF-BFR, the UE may transmit a preamble uniquely assigned to the UE from a base station. In the CB-BFR, the base station may assign the same preamble to a plurality of UEs. In the CF-BFR, the base station may assign a preamble on a per-UE basis.

Moreover, the CB-BFR and the CF-BFR may also be referred to as contention-based PRACH-based BFR (CBRA-BFR) and contention-free PRACH-based BFR (CFRA-BFR), respectively. The CBRA-BFR may also be referred to as CBRA for BFR. The CFRA-BFR may also be referred to as CFRA for BFR.

In either the CB-BFR or the CF-BFR, information relating to the PRACH resource (RA preamble) may be notified by, for example, higher layer signaling (such as RRC signaling). For example, the information may include information indicating a correspondence relationship between a detected DL-RS (beam) and the PRACH resource, and a different PRACH resource may be associated for each DL-RS.

In step S105, the base station that detects the BFRQ transmits a response signal (which may be referred to as a gNB response or the like) in response to the BFRQ from the UE. The response signal may include reconfiguration information (e.g., configuration information of a DL-RS resource) for one or more beams.

The response signal may be transmitted, for example, in a UE-common search space of a PDCCH. The response signal may be notified using a PDCCH (DCI) whose cyclic redundancy check (CRC) is scrambled by an identifier of the UE (e.g., a cell radio network temporary identifier (C-RNTI)). The UE may determine at least one of a transmission beam and a reception beam to be used on the basis of the beam reconfiguration information.

The UE may monitor the response signal based on at least one of a control resource set (CORESET) for BFR and a search space set for BFR.

Regarding the CB-BFR, when the UE receives a PDCCH corresponding to a C-RNTI related to the UE itself, contention resolution may be determined to be successful.

Regarding the processing of step S105, a duration for the UE to monitor a response from the base station (e.g., gNB) to the BFRQ may be configured. The duration may be referred to as, for example, a gNB response window, a gNB window, a beam failure recovery request response window, or the like. The UE may retransmit the BFRQ when no gNB response is detected within the window duration.

In step S106, the UE may transmit a message indicating that beam reconfiguration is completed to the base station. The message may be transmitted by, for example, a PUCCH or may be transmitted by a PUSCH.

Beam recovery success (BR success) may represent, for example, a case where step S106 is reached. On the other hand, beam recovery failure (BR failure) may correspond, for example, to a case where BFRQ transmission reaches a given number of transmissions, or a case where a beam failure recovery timer expires.

In Rel. 15, it is supported to perform a beam failure recovery procedure (e.g., notification of a BFRQ) for a beam failure detected in a special cell (SpCell (PCell/PSCell)) using a random access procedure. On the other hand, in Rel. 16, it is supported to perform a beam failure recovery procedure (e.g., notification of a BFRQ) for a beam failure detected in a secondary cell (SCell) using at least one of transmission of a PUCCH for BFR (e.g., Scheduling Request (SR)) and transmission of a MAC CE for BFR (e.g., UL-SCH).

For example, the UE may transmit information relating to a beam failure using a MAC CE-based two-step procedure. The information relating to the beam failure may include information relating to a cell in which the beam failure is detected and information relating to a new candidate beam (or a new candidate RS index).

### [Step 1]

When a BF is detected, a PUCCH-BFR (Scheduling Request (SR)) may be transmitted from the UE to a PCell/PSCell. Then, a UL grant (DCI) for Step 2 below may be transmitted from the PCell/PSCell to the UE. When a beam failure is detected, if a MAC CE (or UL-SCH) for transmitting information relating to a new candidate beam exists, Step 1 (e.g., PUCCH transmission) may be omitted and Step 2 (e.g., MAC CE transmission) may be performed.

### [Step 2]

Next, the UE may transmit, to the base station (PCell/PSCell) via an uplink channel (e.g., PUSCH) using a MAC CE, information relating to the cell in which a beam failure is detected (a failed cell) (e.g., a cell index thereof) and information relating to a new candidate beam. Thereafter, after a given duration (e.g., 28 symbols) from receiving a response signal from the base station through a BFR procedure, the QCL of PDCCH, PUCCH, PDSCH, and PUSCH may be updated to a new beam.

Moreover, the numbering of these steps is merely for description, and a plurality of steps may be combined, or the order may be changed. In addition, whether or not to perform beam failure recovery (BFR) may be configured for the UE by using higher layer signaling.

### (Radio Link Monitoring (RLM))

In NR, radio link monitoring (RLM) is utilized.

In NR, a base station may configure a radio link monitoring reference signal (RLM-RS) for each BWP to a UE by using higher layer signaling. The UE may receive configuration information for RLM (e.g., "RadioLinkMonitoringConfig" information element of RRC).

The configuration information for RLM may include failure detection resource configuration information (e.g., "failureDetectionResourcesToAddModList" of a higher layer parameter). The failure detection resource configuration information may include a parameter relating to the RLM-RS (e.g., "RadioLinkMonitoringRS" of a higher layer parameter).

The parameter relating to the RLM-RS may include information indicating that the parameter corresponds to a purpose of RLM, an index corresponding to a resource of the RLM-RS (e.g., an index included in "failureDetectionResources" (RadioLinkMonitoringRS in failureDetectionResourcesToAddModList) of a higher layer parameter), and the like. The index may be, for example, an index of a configuration of a CSI-RS resource (e.g., a non-zero power CSI-RS resource ID) or may be an SS/PBCH block index (SSB index). The information on the purpose may indicate a beam failure, a (cell level) radio link failure (RLF), or both.

The UE may identify a certain RLM-RS resource based on an index corresponding to the resource of the RLM-RS, and perform the RLM using the RLM-RS resource.

In RLM of Rel. 16, the UE follows the procedures below.

### [Procedure]

If the UE is not provided with an RLM-RS (e.g., RadioLinkMonitoringRS of a higher layer parameter) and the UE is provided with a TCI state including one or more CSI-RSs for PDCCH reception, the UE follows Procedures 1 to 4.

### [[Procedure 1]]

If the active TCI state for PDCCH reception includes only one RS, the UE uses the corresponding RS provided for the active TCI state for PDCCH reception for the RLM.

### [[Procedure 2]]

If the active TCI state for PDCCH reception includes two RSs, the UE assumes that one RS has QCL type D, and the UE uses the corresponding RS having QCL type D for the RLM. The UE does not assume that both of the RSs have QCL type D.

### [[Procedure 3]]

The UE is not required to use aperiodic or semi-persistent RS for RLM.

### [[Procedure 4]]

For Lₘₐₓ=4, the UE selects N_{RLM} RSs provided for the active TCI state for PDCCH reception in a plurality of CORESETs associated with a plurality of search space sets, in order from a minimum monitoring periodicity. If more than one CORESET is associated with a plurality of search space sets having the same monitoring periodicity, the UE determines an order of the CORESETs from the highest CORESET index.

Here, Lₘₐₓ is a maximum number of SS/PBCH block indices in a cell. The maximum number of SS/PBCH blocks transmitted within a half-frame is Lₘₐₓ.

As described above, when the UE is not provided with an RLM-RS, the UE performs implicit RLM-RS determination and uses an active TCI state for PDCCH reception for RLM. In a case of Lₘₐₓ=4, the UE selects N_{RLM} RSs first in ascending order of the monitoring periodicity of the search space set, and then in descending order of the CORESET indices.

The UE can be configured with up to N_{LR-RLM} RLM-RSs for a link recovery procedure and RLM. From the N_{LR-RLM} RLM-RSs, up to N_{RLM} RLM-RSs are used for the RLM depending on Lₘₐₓ. In Rel. 16, as illustrated in Fig. 1, N_{RLM} = 2 in a case of Lₘₐₓ = 4, N_{RLM} = 4 in a case of Lₘₐₓ = 8, and N_{RLM} = 8 in a case of Lₘₐₓ = 64. Moreover, the correspondence relationship between Lₘₐₓ, N_{RLM}, and N_{LR-RLM} is not limited to these values.

### (Cell-free)

In an existing wireless communication system (e.g., 5G NR), a cellular system in which one cell is formed by one antenna or transmission and reception point (TRP) in principle has been employed. An area formed by the cell is fixed or static.

Further, in an existing wireless communication system (e.g., Rel. 16 or later), distributed multi-input multi-output (distributed MIMO, e.g., multi-TRP utilizing a plurality of TRPs) that forms a communication area by coverage of a plurality of antennas/TRPs has been introduced. In the distributed MIMO, simultaneous communication using a plurality of antennas/TRPs and communication using one antenna/TRP can be performed.

By employing the distributed MIMO, a more favorable line-of-sight environment can be established, and performance improvement relating to MIMO can be achieved.

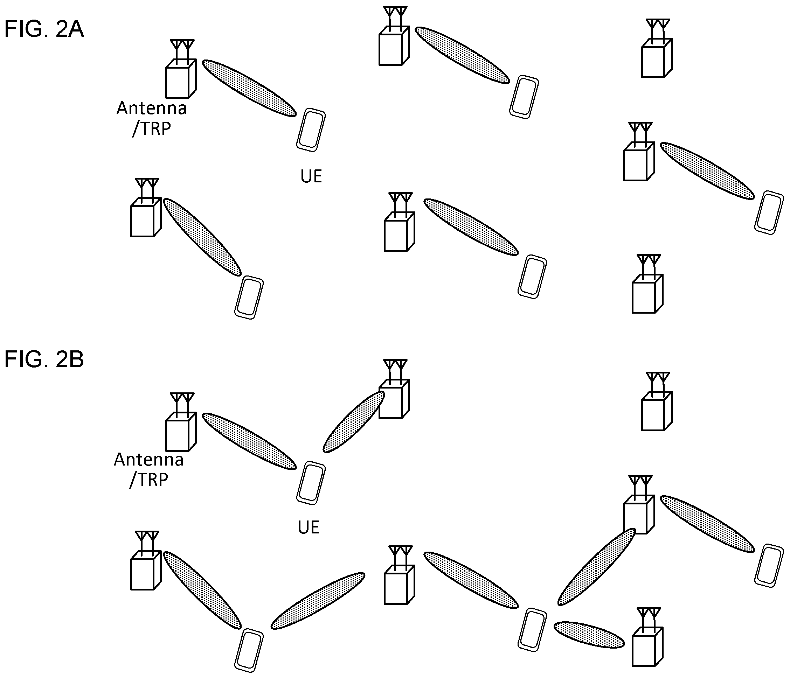

Fig. 2A and Fig. 2B are diagrams illustrating an overview of MIMO. Fig. 2A illustrates an example of co-located MIMO. In the co-located MIMO, one UE communicates with one antenna/TRP.

On the other hand, Fig. 2B illustrates an example of distributed MIMO. In the distributed MIMO, one UE communicates with a plurality of coordinated antennas/TRPs.

In a future wireless communication system (e.g., Rel. 20 or later), introduction of cell-free communication is being studied for the purpose of further improvement in performance and energy efficiency through reduction of interference between a plurality of antennas/TRPs, establishment of a line-of-sight environment corresponding to utilization of high frequencies, improvement in frequency utilization efficiency of an entire system, and application of uniform and high-quality communication to each user.

Cell-free may also be referred to as cell-free massive MIMO (mMIMO) or large-scale distributed MIMO (D-MIMO). Cell-free may use coherent coordination of a large number of access points. Cell-free may include at least one of ultra-dense deployment, scalable cooperation, user-centric clustering, super carrier aggregation, and analog fronthaul. A user plane for cell-free may perform more flexible scheduling than existing scheduling. A control plane for cell-free may maintain several types of cells to facilitate signaling.

In a cell-free system, unlike a conventional cellular system, one area (which may also be referred to as a cell, sub-cell, or the like) may be formed by a plurality of antennas/TRPs. That is, the area may mean a cell that does not depend on a position of the antennas/TRPs.

In a cell-free system, a set of antennas/TRPs used for area formation may be changed in response to the demand of a UE. For example, the set of antennas/TRPs may be changed based on the number of UEs, an amount of traffic, a communication application (e.g., initial access, data communication, measurement, reporting, etc.) and the like, rather than coverage of the antennas/TRPs.

In other words, in a cell-free system, the coverage between a plurality of antennas/TRPs may overlap.

In a cell-free system, a direction for transmitting a synchronization signal (which may be referred to as, e.g., a Synchronization Signal Block (SSB), a Synchronization Signal/Physical Broadcast Channel (SS/PBCH) block, etc.) may be controlled for each antenna/TRP.

Further, in a cell-free system, a central unit (CU)/distributed unit (DU) may be virtualized for each antenna. Alternatively, each antenna may be managed only by a CU.

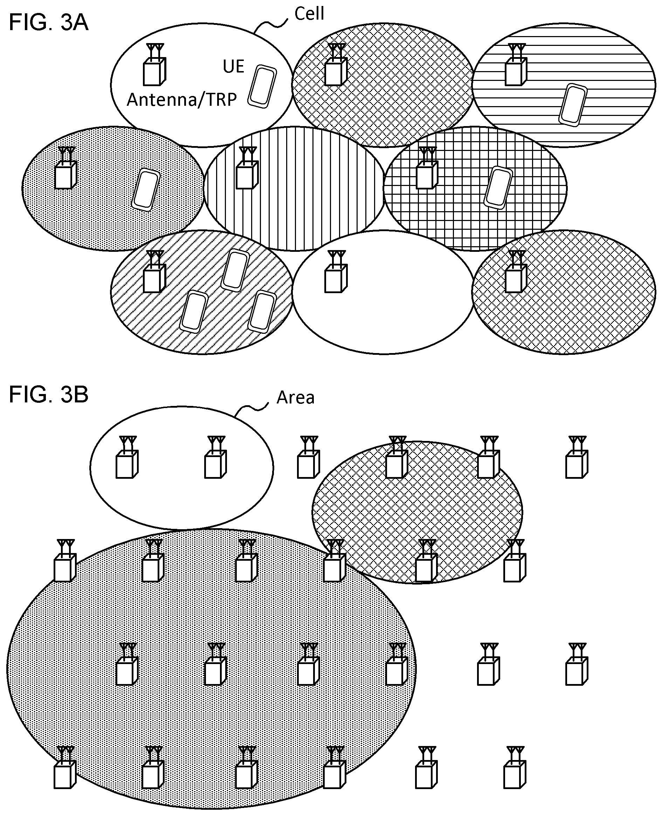

Fig. 3A is a diagram illustrating an overview of a cellular system. Fig. 3A illustrates cells formed by respective antennas/TRPs, and a UE performs communication based on the cells.

On the other hand, Fig. 3B is a diagram illustrating an overview of a cell-free system. In an example illustrated in Fig. 3B, installed antennas/TRPs do not form fixed/static cells in a cellular system. As illustrated in Fig. 3B, in the cell-free system, one or more antennas/TRPs form an area depending on conditions. Accordingly, in the cell-free system, each antenna/TRP does not need to necessarily correspond to the same Physical Cell ID, and areas between a plurality of antennas/TRPs may overlap.

Cell-free may be implemented, for example, by adjusting a set of antennas/TRPs controlled by a central control unit (e.g., CU).

In a cell-free system, a first cell with a physical range fixed like a cell in a 5G NR system (which may be referred to as, e.g., a cell, a super cell, a macro cell, a large cell, etc.) and a second cell with a physical range varying semi-statically or dynamically based on conditions (which may be referred to as, e.g., a sub-cell, an area, a micro cell, a cell, a small cell, a second cell within the first cell, etc.) may be formed.

For example, to distinguish from the second cell, the first cell may be referred to as a super cell. When the super cell includes a plurality of second cells, the second cell may have definition/operation/coverage similar to an existing cell in NR. For example, to distinguish from the first cell, the second cell may be referred to as a sub-cell. When the super cell or the cell includes a plurality of sub-cells, the sub-cell may have definition/operation/coverage similar to an existing cell in NR.

The first cell may be a cell newly defined in a future wireless communication system, or a definition of a cell in an existing wireless communication system may be reused.

For configurations of the first cell and the second cell, the following Assumption 1 and Assumption 2 may be considered:
Assumption 1: The first cell includes a plurality of TRPs having one cell ID (Physical Cell ID (PCI)). The plurality of TRPs can perform transmission and reception in coordination.
Assumption 2: The first cell includes a plurality of TRPs (or sub-cells) having different cell IDs. The plurality of TRPs/sub-cells can perform transmission and reception in coordination.

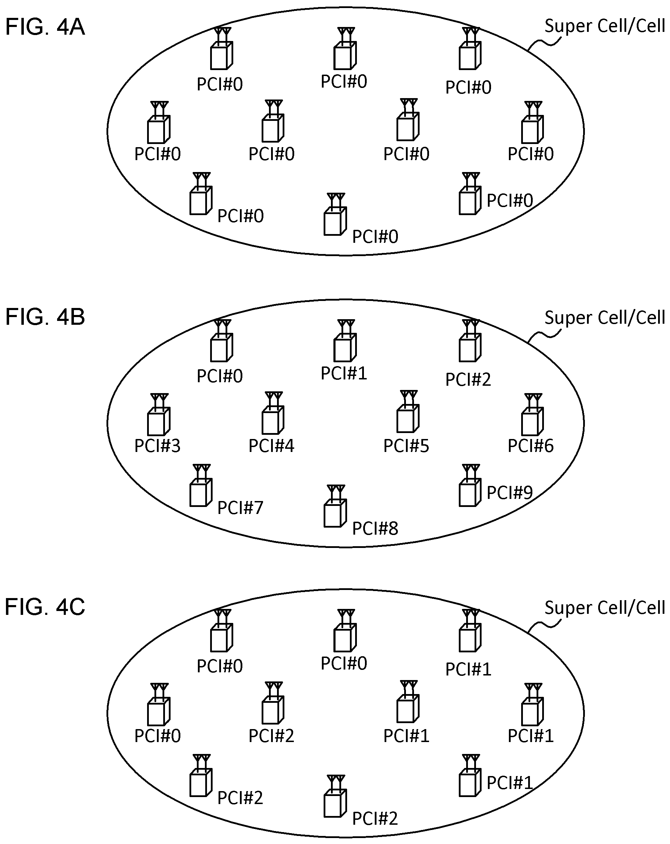

Fig. 4A is a diagram illustrating an example of an overview of Assumption 1 of the cell-free configuration. In an example illustrated in Fig. 4A, each TRP included in the first cell (super cell/cell) has the same PCI (PCI #0). The plurality of TRPs can perform communication with one UE in coordination.

Fig. 4B is a diagram illustrating an example of an overview of Assumption 2 of the cell-free configuration. In an example illustrated in Fig. 4B, each TRP included in the first cell (super cell/cell) has a different PCI (PCI #0 to #9). The plurality of TRPs can perform communication with one UE in coordination.

Fig. 4C is a diagram illustrating another example of the overview of Assumption 2 of the cell-free configuration. In an example illustrated in Fig. 4C, a PCI is assigned to each TRP included in the first cell (super cell/cell). In the example illustrated in Fig. 4C, unlike the example of Fig. 4B, the same one PCI may correspond to a plurality of TRPs. The plurality of TRPs can perform communication with one UE in coordination.

Transmission/reception involving coordination of TRPs/sub-cells may be based on at least one of the following several schemes supported in NR.
- Transmission of a single TRP/sub-cell with dynamic switching of TRP/sub-cells (single TRP transmission)
- Joint transmission using a plurality of TRPs/sub-cells (multi-TRP joint transmission) The joint transmission may be based on a single DCI or a multi-DCI. The joint transmission may be non-coherent joint transmission (NCJT) or coherent joint transmission (CJT).

For cell-free, assuming ideal backhaul and tight coordination, in a joint transmission scheme, CJT may be preferred over NCJT, and single DCI-based joint transmission may be preferred over multi-DCI-based joint transmission.

### (Analysis)

In the cell-free system described above, it is conceivable that various configurations/parameters are configured for a UE on a per second cell (area/sub-cell) basis.

However, sufficient study has not been conducted on how to configure the first cell/second cell in the cell-free system.

Further, in a case where a change of the second cell is performed dynamically/semi-statically, various configurations/parameters on a per second cell basis may be changed accordingly.

When such various configurations/parameters are changed, there is a possibility that some UEs (a plurality of UEs) simultaneously encounter RLF/BF.

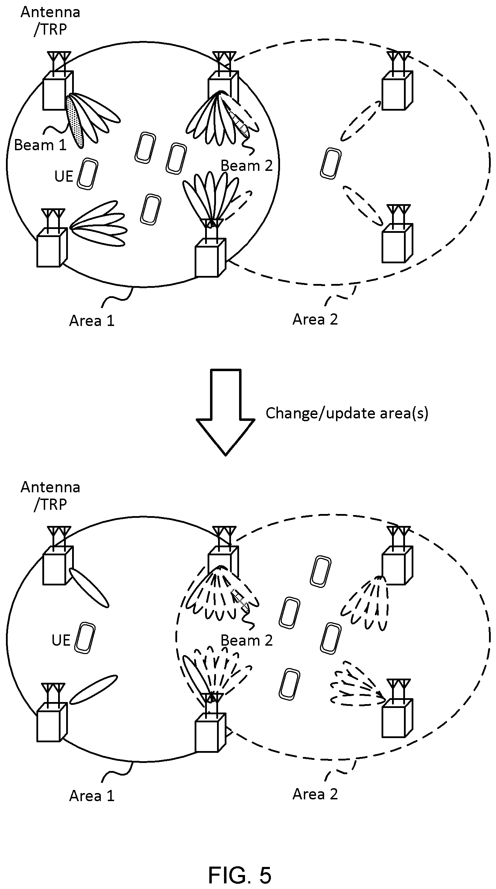

Fig. 5 is a diagram illustrating an example of a change accompanying a change of the second cell. In the example illustrated in Fig. 5, two areas of Area 1 (solid line) and Area 2 (dashed line) are illustrated, and beams for the respective areas (a beam for Area 1 is indicated by a solid line, and a beam for Area 2 is indicated by a dashed line) are illustrated.

The example illustrated in Fig. 5 indicates a case where, when an area is changed/updated, a beam for Area 1 before the area change (e.g., Beam 1) is not transmitted after the area change. In this instance, the UE that was using Beam 1 experiences RLF/BF.

Further, the example illustrated in Fig. 5 indicates a case where, when an area is changed/updated, a beam for Area 1 (e.g., Beam 2) before the area change is changed to a beam for Area 2 after the area change. In this instance, a UE that was using Beam 2 in Area 1 experiences RLF/BF.

Further, also in a case where a position of a TRP is not fixed and the TRP physically moves (e.g., in a case of a mobile base station/non-terrestrial networks (NTN)), there is a possibility that some UEs (a plurality of UEs) may simultaneously experience RLF/BF.

However, sufficient study has not been conducted on detection of a change/update of the second cell in a cell-free system and a method of identifying RLF/BF accompanying the change/update from existing RLF/BF.

If such studies are not sufficient, appropriate communication using a cell/area that is dynamically/semi-statically changed is incapable of being performed, and there is a concern that improvement in communication throughput may be suppressed.

Accordingly, the present inventors have conceived a method of solving the above-described problems.

Hereinafter, embodiments according to the present disclosure will be described in detail with reference to the drawings. A wireless communication method according to each embodiment may be applied independently or may be applied in combination.

In the present disclosure, "A/B" and "at least one of A and B" may be interchangeable. Further, in the present disclosure, "A/B/C" may mean "at least one of A, B, and C".

In the present disclosure, notification, activating, deactivating, indicating, selecting, configuring, updating, determining, and the like may be interchangeable. In the present disclosure, supporting, controlling, controllable, operating, operable, and the like may be interchangeable.

In the present disclosure, Radio Resource Control (RRC), an RRC parameter, an RRC message, a higher layer parameter, a field, an information element (IE), configuration, and the like may be interchangeable. In the present disclosure, a Medium Access Control control element (MAC control element (CE)), an update command, an activation/deactivation command, and the like may be interchangeable.

In the present disclosure, higher layer signaling may be, for example, any of Radio Resource Control (RRC) signaling, Medium Access Control (MAC) signaling, broadcast information, other messages (e.g., a message from a core network such as a positioning protocol (e.g., NR positioning protocol A (NRPPa)/LTE positioning protocol (LPP)) message), or a combination thereof.

In the present disclosure, for MAC signaling, for example, a MAC control element (MAC CE), a MAC protocol data unit (PDU), or the like may be used. Broadcast information may be, for example, a master information block (MIB), a system information block (SIB), remaining minimum system information (RMSI), other system information (OSI), or the like.

In the present disclosure, physical layer signaling may be, for example, Downlink Control Information (DCI), Uplink Control Information (UCI), or the like.

### (Wireless Communication Method)

In the present disclosure, a cell with a fixed physical range, a cell with an unchanged physical range, a first cell, a super cell, a cell, a macro cell, a large cell, and the like may be interchangeable.

In the present disclosure, a cell with a physical range varying semi-statically or dynamically based on conditions, a cell that is changed, a second cell, a cell, an area, a micro cell, a small cell, a second cell within the first cell, and the like may be interchangeable.

The first cell may include one or more second cells.

One second cell may be included in a plurality of first cells. Different first cells may share one second cell.

Different first cells may overlap or need not necessarily overlap.

### <Embodiment 0>

In the present embodiment, configurations of a first cell and a second cell will be described.

A UE may perform transmission and reception of a signal by using the second cell included in the first cell. The UE may receive a configuration relating to the second cell and may perform transmission and reception of the signal based on the configuration.

A component of one Physical Cell ID (PCI) may include at least one of the following:
- Number of TRPs per PCI
- TRP coverage layout
- Number of synchronization signals (e.g., SSB, SS/PBCH block) per TRP

The configuration of the first cell may be associated with a component of the PCI. The first cell may be configured based on the component of the PCI.

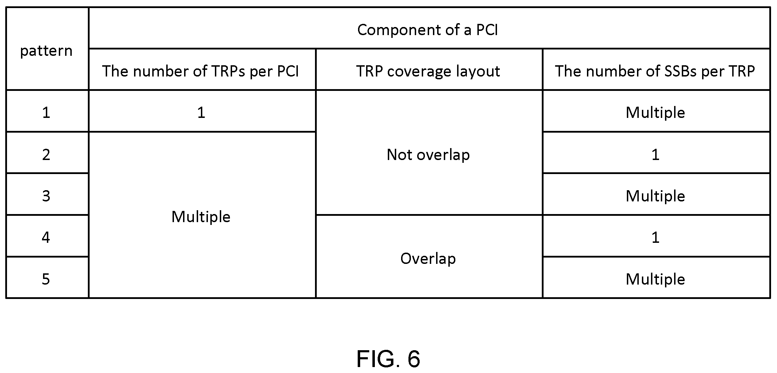

Fig. 6 is a diagram illustrating an example of a pattern of components (PCI components) of one PCI. As illustrated in Fig. 6, the PCI component includes the number of TRPs per PCI, a TRP coverage layout, and the number of SSBs per TRP.

As illustrated in Fig. 6, the number of TRPs per PCI can take one or more values, the TRP coverage layout can take either non-overlapping or overlapping coverage of TRPs, and the number of SSBs per TRP can take one or more values.

In the present disclosure, a pattern pertaining to the PCI component may be any of patterns 1 to 5 illustrated in Fig. 6. The pattern numbers illustrated in Fig. 6 are merely examples and are not limited to these examples. In addition, the PCI component may include elements other than the elements illustrated in Fig. 6.

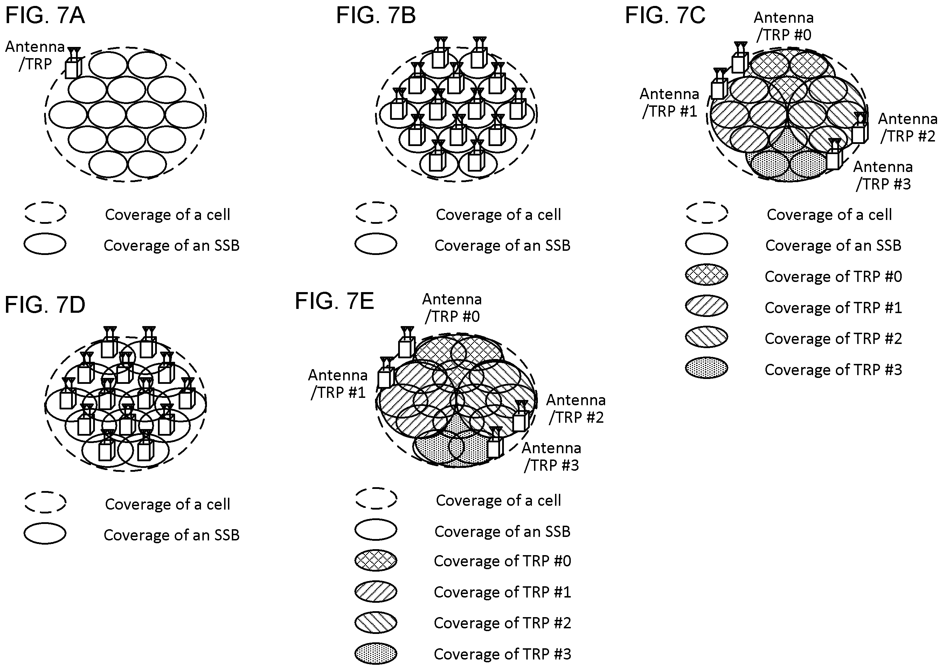

Fig. 7A is a diagram illustrating an example of a cell configuration pertaining to pattern 1. In the cell configuration illustrated in Fig. 7A, the number of TRPs included in a PCI/cell is one, the TRP coverages do not overlap, and the number of SSBs per TRP is plural. Moreover, in the cell configuration in Fig. 7A, the TRP coverage may coincide with the coverage of a cell (first cell) (thus, the TRP coverage is not illustrated in Fig. 7A).

For example, inter-cell multi-TRP operation can be performed using a cell configuration pertaining to pattern 1 as illustrated in Fig. 7A.

Fig. 7B is a diagram illustrating an example of a cell configuration pertaining to pattern 2. In the cell configuration illustrated in Fig. 7B, the number of TRPs included in a PCI/cell is plural, the TRP coverages do not overlap, and the number of SSBs per TRP is one. Moreover, in the cell configuration in Fig. 7B, the TRP coverage may coincide with the coverage of an SSB (thus, the TRP coverage is not illustrated in Fig. 7B).

For example, the inter-cell multi-TRP operation can be performed using the cell configuration pertaining to pattern 2 as illustrated in Fig. 7B.

Fig. 7C is a diagram illustrating an example of a cell configuration pertaining to pattern 3. In the cell configuration illustrated in Fig. 7C, the number of TRPs included in a PCI/cell is plural, the TRP coverages do not overlap, and the number of SSBs per TRP is plural.

For example, the inter-cell multi-TRP operation can be performed using the cell configuration pertaining to pattern 3 as illustrated in Fig. 7C.

Fig. 7D is a diagram illustrating an example of a cell configuration pertaining to pattern 4. In the cell configuration illustrated in Fig. 7D, the number of TRPs included in a PCI/cell is plural, the TRP coverages overlap, and the number of SSBs per TRP is one. Moreover, in the cell configuration in Fig. 7D, the TRP coverage may coincide with the coverage of an SSB (thus, the TRP coverage is not illustrated in Fig. 7D).

For example, the inter-cell/intra-cell multi-TRP operation can be performed using the cell configuration pertaining to pattern 4 as illustrated in Fig. 7D.

Fig. 7E is a diagram illustrating an example of a cell configuration pertaining to pattern 5. In the cell configuration illustrated in Fig. 7E, the number of TRPs included in a PCI/cell is plural, the TRP coverages overlap, and the number of SSBs per TRP is plural.

For example, the inter-cell/intra-cell multi-TRP operation can be performed using the cell configuration pertaining to pattern 5 as illustrated in Fig. 7E.

Further, the components of one second cell (e.g., area) may include at least one of the following:
- Number of CUs/DUs per second cell
- Number of PCIs per second cell
- Number of TRPs per second cell
- Number of synchronization signals (e.g., SSB, SS/PBCH block) per second cell

The configuration of the second cell may be associated with a component of the second cell. The second cell may be configured based on the component of the second cell.

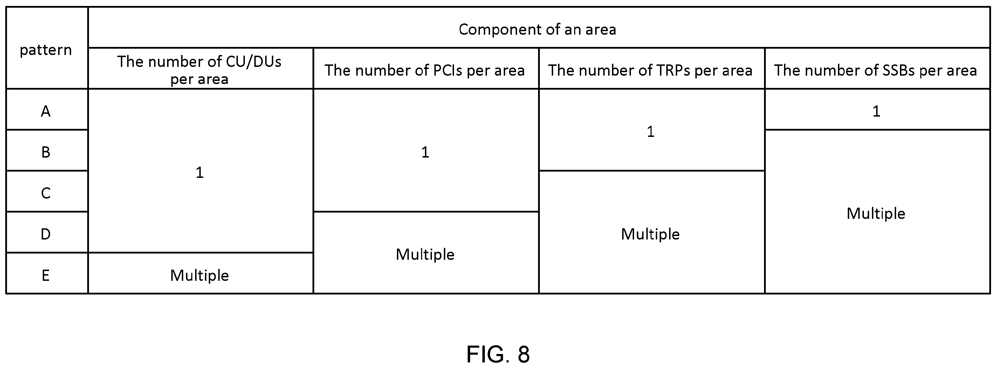

Fig. 8 is a diagram illustrating an example of a pattern of a component of one area (area component). As illustrated in Fig. 8, the area component includes the number of CUs/DUs per area, the number of PCIs per area, the number of TRPs per area, and the number of synchronization signals per area.

As illustrated in Fig. 8, the number of CUs/DUs per second cell, the number of PCIs per second cell, the number of TRPs per second cell, and the number of synchronization signals per second cell can each take one or more values.

In the present disclosure, a pattern pertaining to the area component may be any of patterns A to E illustrated in Fig. 8. The symbols of the patterns illustrated in Fig. 8 are merely examples and are not limited to these examples. In addition, the area component may include elements other than the elements illustrated in Fig. 8.

For example, the second cell pertaining to patterns A, D, and E described above may be configurable in any first cell (cell configuration).

Hereinafter, configurations of a first cell/second cell in a case where different cells overlap and a case where different cells do not overlap will be described. At least one of the configurations of the first cell/second cell described below may be defined/configured.

### << Configuration of First Cell/Second Cell pertaining to Pattern 1 >>

### [Option 1-1]

Different first cells need not necessarily overlap (physically).

In this option, the second cell pertaining to at least one of patterns A, B, D, and E described above may be configured.

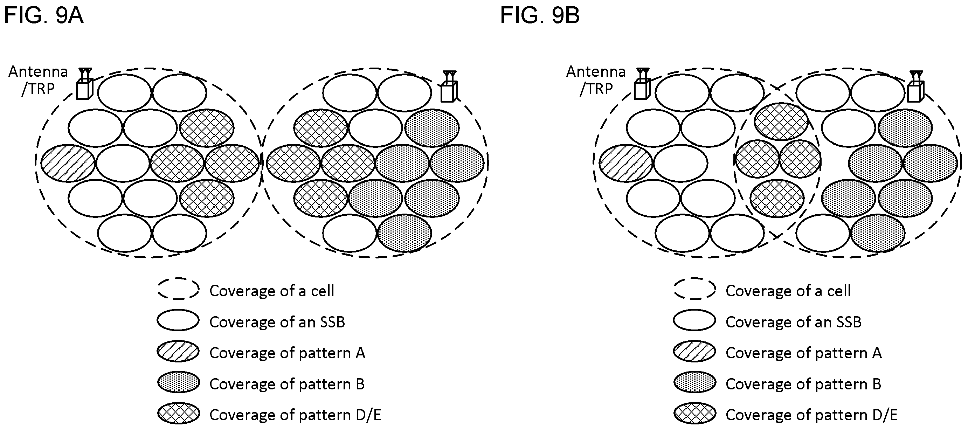

Fig. 9A is a diagram illustrating an example of a configuration of a first cell/second cell pertaining to Option 1-1. In the example illustrated in Fig. 9A, two different cells (first cells) do not overlap.

In the example illustrated in Fig. 9A, a second cell pertaining to pattern A (coverage of the second cell), a second cell pertaining to pattern B (coverage of the second cell), and a second cell pertaining to pattern D/E (coverage of the second cell) are illustrated.

Moreover, in the cell configuration in Fig. 9A, the TRP coverage may coincide with the coverage of a cell (first cell) (thus, the TRP coverage is not illustrated in Fig. 9A).

In the configuration of this option, only a single TRP operation may be operable in each second cell.

According to the configuration of this option, more suitable network energy saving (NES) can be performed.

### [Option 1-2]

Different first cells may overlap (physically).

In this option, the second cell pertaining to at least one of patterns A, B, D, and E described above may be configured.

Fig. 9B is a diagram illustrating an example of a configuration of a first cell/second cell according to Option 1-2. In the example illustrated in Fig. 9B, two different cells (first cells) overlap.

In the example illustrated in Fig. 9B, a second cell pertaining to pattern A (coverage of the second cell), a second cell pertaining to pattern B (coverage of the second cell), and a second cell pertaining to pattern D/E (coverage of the second cell) are illustrated.

Moreover, in the cell configuration in Fig. 9B, the TRP coverage may coincide with the coverage of a cell (first cell) (thus, the TRP coverage is not illustrated in Fig. 9B).

In the configuration of this option, for example, in the second cell pertaining to pattern D/E, the inter-cell multi-TRP operation may be operable.

According to the configuration of this option, for example, an increase in coverage within overlapping cells can improve uniformity in communication quality.

Further, according to the configuration of this option, for example, a decrease in coverage within overlapping cells can improve frequency utilization efficiency.

Further, in the configuration of this option, reuse of an antenna/TRP of an existing NR specification can enable operation by changing an antenna/TRP device to overlap with coverage deployed in the existing NR, and can reduce station installation costs.

### << Configuration of First Cell/Second Cell pertaining to Pattern 2/Pattern 4 >>

### [Option 2/4-1]

Different first cells need not necessarily overlap (physically).

In this option, the second cell pertaining to at least one of patterns A, C, D, and E described above may be configured.

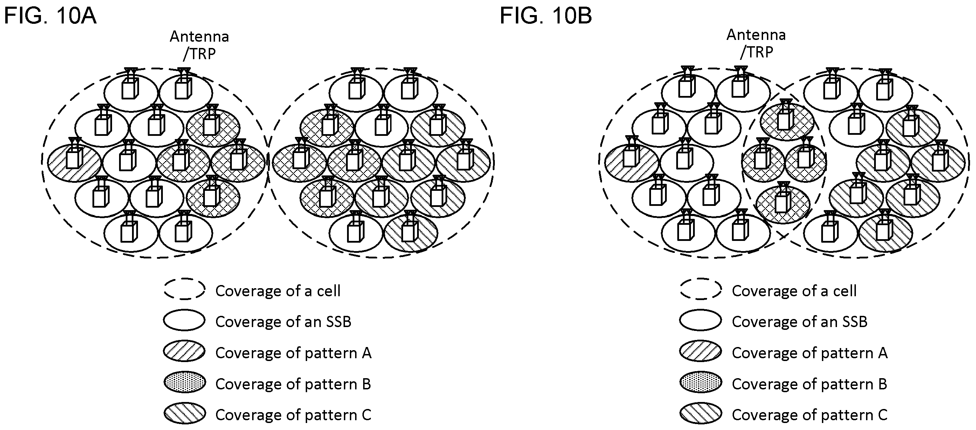

Fig. 10A is a diagram illustrating an example of a configuration of a first cell/second cell pertaining to Option 2/4-1. In the example illustrated in Fig. 10A, two different cells (first cells) do not overlap.

In the example illustrated in Fig. 10A, a second cell pertaining to pattern A (coverage of the second cell), a second cell pertaining to pattern C (coverage of the second cell), and a second cell pertaining to pattern D/E (coverage of the second cell) are illustrated.

Moreover, in the cell configuration in Fig. 10A, the TRP coverage may coincide with the coverage of an SSB (thus, the TRP coverage is not illustrated in Fig. 10A).

Further, in the configuration of this option, only a single TRP operation may be operable in each second cell.

According to the configuration of this option, for example, an increase in the number of TRPs per first cell can improve uniformity in communication quality and frequency utilization efficiency.

### [Option 2/4-2]

Different first cells may overlap (physically).

In this option, the second cell pertaining to at least one of patterns A, C, D, and E described above may be configured.

Fig. 10B is a diagram illustrating an example of a configuration of a first cell/second cell according to Option 2/4-2. In the example illustrated in Fig. 10B, two different cells (first cells) overlap.

In the example illustrated in Fig. 10B, a second cell pertaining to pattern A (coverage of the second cell), a second cell pertaining to pattern C (coverage of the second cell), and a second cell pertaining to pattern D/E (coverage of the second cell) are illustrated.

Moreover, in the cell configuration in Fig. 10B, the TRP coverage may coincide with the coverage of an SSB (thus, the TRP coverage is not illustrated in Fig. 10B).

In the configuration of this option, for example, in the second cell pertaining to pattern D/E, the inter-cell multi-TRP operation may be operable.

According to the configuration of this option, for example, an increase in coverage within overlapping cells can improve uniformity in communication quality.

Further, according to the configuration of this option, for example, a decrease in coverage within overlapping cells can improve frequency utilization efficiency.

Further, according to the configuration of this option, for example, an increase in the number of TRPs per first cell can improve uniformity in communication quality and frequency utilization efficiency.

### << Configuration of First Cell/Second Cell pertaining to Pattern 3/Pattern 5 >>

### [Option 3/5-1]

Different first cells need not necessarily overlap (physically).

In this option, the second cell pertaining to at least one of patterns A, B, C, D, and E described above may be configured.

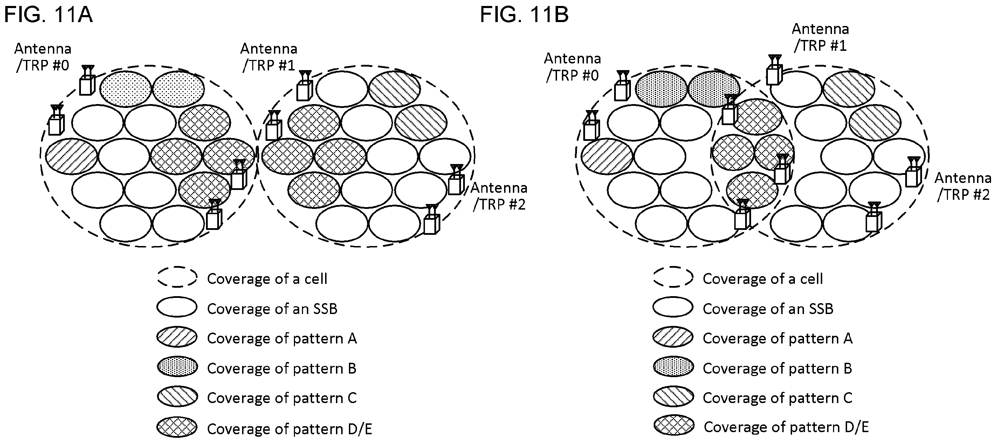

Fig. 11A is a diagram illustrating an example of a configuration of a first cell/second cell pertaining to Option 3/5-1. In the example illustrated in Fig. 11A, two different cells (first cells) do not overlap.

In the example illustrated in Fig. 11A, a second cell pertaining to pattern A (coverage of the second cell), a second cell pertaining to pattern B (coverage of the second cell), a second cell pertaining to pattern C (coverage of the second cell), and a second cell pertaining to pattern D/E (coverage of the second cell) are illustrated.

Moreover, an example is illustrated in which the second cell pertaining to pattern B illustrated in Fig. 11A is included only in the coverage of antenna/TRP #0. In addition, an example is illustrated in which the second cell pertaining to pattern C illustrated in Fig. 11A corresponds to an overlapping portion between the coverage of antenna/TRP #1 and the coverage of antenna/TRP #2.

In the configuration of this option, a single TRP operation may be operable in each second cell.

Further, in the configuration of this option, in the second cell in which coverages of a plurality of TRPs overlap, the intra-cell multi-TRP operation may be operable. With this configuration, frequency utilization efficiency can be improved.

Further, according to the configuration of this option, for example, an increase in the number of TRPs per first cell can improve uniformity in communication quality and frequency utilization efficiency.

### [Option 3/5-2]

Different first cells may overlap (physically).

In this option, the second cell pertaining to at least one of patterns A, B, C, D, and E described above may be configured.

Fig. 11B is a diagram illustrating an example of a configuration of a first cell/second cell according to Option 3/5-2. In the example illustrated in Fig. 11B, two different cells (first cells) overlap.

In the example illustrated in Fig. 11B, a second cell pertaining to pattern A (coverage of the second cell), a second cell pertaining to pattern B (coverage of the second cell), a second cell pertaining to pattern C (coverage of the second cell), and a second cell pertaining to pattern D/E (coverage of the second cell) are illustrated.

Moreover, an example is illustrated in which the second cell pertaining to pattern B illustrated in Fig. 11B is included only in the coverage of antenna/TRP #0. In addition, an example is illustrated in which the second cell pertaining to pattern C illustrated in Fig. 11B corresponds to an overlapping portion between the coverage of antenna/TRP #1 and the coverage of antenna/TRP #2.

In the configuration of this option, for example, in the second cell pertaining to pattern D/E, the inter-cell multi-TRP operation may be operable.

Further, in the configuration of this option, in the case of a cell configuration of pattern 5, the intra-cell multi-TRP operation may be operable. With this configuration, frequency utilization efficiency can be improved.

According to the configuration of this option, for example, uniformity in communication quality and frequency utilization efficiency can be improved as compared with Option 1-2 described above, and station installation costs can be suppressed as compared with Option 2/4-2.

According to the present embodiment, a configuration pertaining to the second cell can be defined in detail and appropriately.

### << Flexibility of Second Cell >>

The second cell may be configured/reconfigured based on a certain condition/trigger. The definition of the second cell will be described in detail below.

The configuration of the second cell may be changed/updated based on a certain condition/trigger.

The certain condition/trigger may be at least one of, for example, a condition/trigger relating to a distribution of UEs, a condition/trigger relating to traffic, a condition/trigger relating to particular events, and a condition/trigger based on certain information (e.g., at least one of time-related information, location information relating to UE/TRP, and information relating to a period).

For example, the condition/trigger relating to the distribution of UEs may be a condition/trigger based on the distribution/number of UE within a first cell/second cell.

For example, the condition/trigger relating to traffic may be a condition/trigger based on at least one of a traffic volume/communication volume in the first cell/second cell, a traffic volume/communication volume for a TRP, and a traffic volume/communication volume for an SSB.

For example, at least one of the condition/trigger regarding the particular events and the particular events regarding the condition/trigger may be predefined in the specification or may depend on an implementation of an NW.

For example, the condition/trigger based on the certain information may be a condition/trigger based on at least one of time-related information, information relating to a certain timer, location information relating to UE/TRP, and information relating to a period (e.g., date and time/day of the week/climate, and the like).

The second cell may be statically configured based on the certain condition/trigger or regardless of the certain condition/trigger.

The second cell may be dynamically/semi-statically configured based on the certain condition/trigger. With this configuration, power consumption in the NW can be reduced, and communication quality matching the demand of UE can be provided.

A restriction pertaining to change/update of the second cell may be defined. The NW may determine not to perform the change/update of the second cell in a certain case.

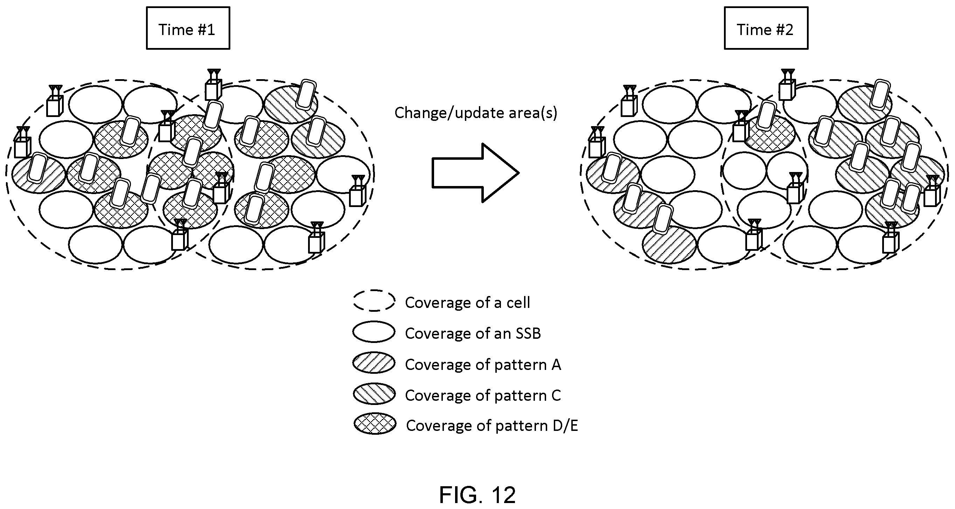

Fig. 12 is a diagram illustrating an example of a change in the configuration of the second cell. In the example illustrated in Fig. 12, a case is illustrated in which a range of a second cell (area) is changed in response to a change in the distribution of UEs and the time (from time #1 to time #2).

According to the present embodiment, the change/update of the configuration of the second cell can be appropriately defined.

### << Definition of Second Cell >>

The configuration/definition of the second cell will be described below.

Regarding the configuration/definition of the second cell, at least one of Option 0-1 and Option 0-2 below may be combined with the description pertaining to the above-mentioned second cell as appropriate without contradiction.

### [Option 0-1]

The second cell may be configured by one cell (first cell)/PCI.

For example, the second cell may be identified by a PCI (similarly to an existing NR). For example, the second cell may be configured with a PCI similar to the existing NR.

The PCI may be defined similarly to, for example, a PCI defined in the existing NR.

This option may correspond to Assumption 1 described above.

### [[Option 0-1-1]]

The second cell may be configured by one TRP for one cell. In other words, one second cell may correspond to one TRP.

### [[[Option 0-1-1-1]]]

The second cell may be configured by one synchronization signal for one cell (e.g., at least one of an SSB and an SS/PBCH block). In other words, one second cell may correspond to one synchronization signal. Such a configuration corresponds to, for example, the second cell pertaining to pattern A in at least one of Options 1-1, 1-2, 2/4-1, 2/4-2, 3/5-1, and 3/5-2 described above.

### [[[Option 0-1-1-2]]]

The second cell may be configured by a plurality of synchronization signals for one cell (e.g., a part of synchronization signals for one cell). In other words, one second cell may correspond to a plurality of synchronization signals (a part of synchronization signals for one cell). Such a configuration corresponds to, for example, the second cell pertaining to pattern B in at least one of Options 1-1, 1-2, 3/5-1, and 3/5-2 described above.

### [[[Option 0-1-1-3]]]

The second cell may be configured by a plurality of synchronization signals for one cell (e.g., all synchronization signals for one cell). In other words, one second cell may correspond to a plurality of synchronization signals (all synchronization signals for one cell). Such a configuration corresponds to, for example, the second cell pertaining to pattern B in at least one of Options 1-1 and 1-2 described above.

### [[Option 0-1-2]]

The second cell may be configured by a plurality of TRPs for one cell (e.g., a part of TRPs for one cell). In other words, one second cell may correspond to a plurality of TRPs (a part of TRPs for one cell).

### [[[Option 0-1-2-1]]]

The second cell may be configured by a plurality of synchronization signals for one cell (e.g., a part of synchronization signals for one cell). In other words, one second cell may correspond to a plurality of synchronization signals (a part of synchronization signals for one cell). Such a configuration corresponds to, for example, the second cell pertaining to pattern C in at least one of Options 2/4-1, 2/4-2, 3/5-1, and 3/5-2 described above.

### [[Option 0-1-3]]

The second cell may be configured by a plurality of TRPs for one cell (e.g., all TRPs for one cell). In other words, one second cell may correspond to a plurality of TRPs (all TRPs for one cell).

### [[[Option 0-1-3-1]]]

The second cell may be configured by one synchronization signal for one cell (e.g., at least one of an SSB and an SS/PBCH block). In other words, one second cell may correspond to one synchronization signal. Such a configuration corresponds to, for example, the second cell pertaining to pattern A in at least one of Options 1-1 and 1-2 described above.

### [[[Option 0-1-3-2]]]

The second cell may be configured by a plurality of synchronization signals for one cell (e.g., a part of synchronization signals for one cell). In other words, one second cell may correspond to a plurality of synchronization signals (a part of synchronization signals for one cell). Such a configuration corresponds to, for example, a second cell pertaining to pattern B in at least one of Options 1-1 and 1-2 described above, and a second cell pertaining to pattern C in at least one of Options 3/5-1 and 3/5-2 described above.

### [[[Option 0-1-3-3]]]

The second cell may be configured by a plurality of synchronization signals for one cell (e.g., all synchronization signals for one cell). In other words, one second cell may correspond to a plurality of synchronization signals (all synchronization signals for one cell). Such a configuration corresponds to, for example, a second cell pertaining to pattern B in at least one of Options 1-1 and 1-2 described above, and a second cell pertaining to pattern C in at least one of Options 2/4-1, 2/4-2, 3/5-1, and 3/5-2 described above.

### [Option 0-2]

The second cell may be configured by a plurality of cells (first cells)/PCI.

The PCI may be defined similarly to, for example, a PCI defined in the existing NR.

This option may correspond to Assumption 2 described above.

### [[Option 0-2-1]]

The second cell may be configured by a plurality of TRPs. In other words, one second cell may correspond to a plurality of TRPs.

The TRP may be defined similarly to, for example, a TRP defined in the existing NR.

### [[[Option 0-2-1-1]]]

The second cell may be configured by a plurality of synchronization signals. In other words, one second cell may correspond to a plurality of synchronization signals. Such a configuration corresponds to, for example, a second cell pertaining to pattern D/E in at least one of Options 1-1, 1-2, 2/4-1, 2/4-2, 3/5-1, and 3/5-2 described above.

Each of the above-described Options may be selected/determined based on the above-mentioned condition/trigger (e.g., a condition/trigger based on time/the number of UEs/traffic, and the like).

The change/update of each of the above-described Options may be configured/indicated/notified to the UE based on at least one of system information (e.g., SIB/MIB), higher layer signaling (RRC parameter/MAC CE), and DCI.

The change/update of each of the above-described Options may be performed based on the above-mentioned condition/trigger (e.g., a timer/event), or may be performed based on implementation of an NW/UE.

The second cell may be identified by a certain ID.

The certain ID may have a fixed value.

Further, the certain ID may be a virtual ID. In other words, the certain ID is an ID that can be dynamically changed, and a configuration/range/position of the second cell may be dynamically changed in response to a change of the ID.

Common/dedicated configuration/parameters for a plurality of second cells may be notified to the UE. The configuration/parameter may be notified using, for example, a higher layer (RRC) parameter.

The configuration/parameter may be, for example, a configuration/parameter relating to PCI/TRP/SSB.

The second cell may be used for a certain purpose/property. In other words, the second cell may be defined/configured/identified using a certain purpose/property.

The certain purpose may be at least one of, for example, a control plane, a user plane, paging, measurement, reporting, measurement reporting, beam indication/activation, transmission/reception of a certain channel/signal (e.g., PUCCH/PUSCH/SRS/PDCCH/PDSCH/CSI-RS), initial access, an on-demand signal, and a trigger signal for handover.

The certain property may be at least one of, for example, Doppler shift, Doppler spread, average delay, average spread, a band/component carrier, subcarrier spacing, a TCI state, a spatial relation, a QCL type, a timing advance value, downlink transmission timing, and RNTI.

The number of PCIs/TRPs/SSBs in one second cell (e.g., a maximum number) may be predefined in the specification, may be configured/indicated/notified to the UE using higher layer signaling (RRC/MAC CE)/DCI, may be determined based on reporting of UE capability information, or may be determined by combining at least two of these.

The second cell may be (physically) arranged continuously. In addition, the second cell may be (physically) arranged discontinuously.

According to the present embodiment, a configuration pertaining to the second cell can be defined in detail and appropriately.

### << Sharing between Second Cells >>

### [Option 0-3-1]

Between a plurality of second cells, a synchronization signal (e.g., at least one of an SSB and an SS/PBCH block) may be shared. The UE may assume that the same (shared/common) synchronization signals are receivable in a plurality of different second cells.

In this case, the information included in the synchronization signal may be configurable as information dedicated to the second cell.

In Option 0-3-1, a TRP/PCI may be shared between a plurality of second cells.

In Option 0-3-1, between a plurality of second cells, at least one of an ID relating to the same synchronization signal (e.g., SSB ID/SSB index/candidate SSB index), an ID relating to the same TRP (e.g., at least one of an ID for identifying a TRP, a TRP ID, and a CORESET pool index), and the same PCI may be used.

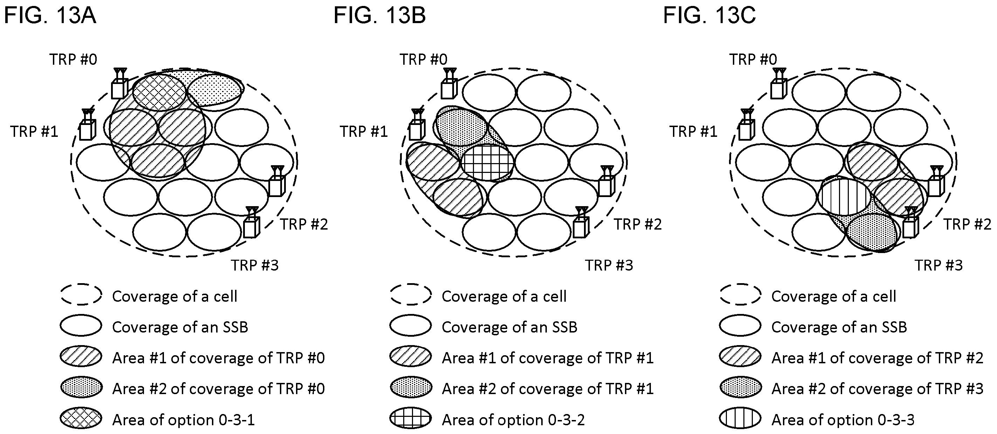

Fig. 13A is a diagram illustrating an example of an area pertaining to Option 0-3-1. In Fig. 13A, one cell including TRP #0 to TRP #3 is illustrated. In the example illustrated in Fig. 13A, Area #1 and Area #2 are formed within coverage of TRP #0. An area where Area #1 and Area #2 overlap has the same SSB coverage. That is, in the overlapping area, Area #1 and Area #2 can share the same SSB/TRP/PCI.

By enabling a configuration such as Option 0-3-1, the most flexible configuration of the second cell can be achieved.

### [Option 0-3-2]

Between a plurality of second cells, a synchronization signal does not necessarily need to be shared. The UE may assume that it does not receive the same (shared/common) synchronization signal in a plurality of different second cells.

In this case, the information included in the synchronization signal may be configurable as information dedicated to the second cell. In addition, in this case, the second cell may be identified using an index relating to the synchronization signal.

In Option 0-3-2, a TRP/PCI may be shared between a plurality of second cells.

In Option 0-3-2, between a plurality of second cells, at least one of an ID relating to the same TRP (e.g., at least one of an ID for identifying a TRP, a TRP ID, and a CORESET pool index) and the same PCI may be used.

Fig. 13B is a diagram illustrating an example of an area pertaining to Option 0-3-2. In Fig. 13B, one cell including TRP #0 to TRP #3 is illustrated. In the example illustrated in Fig. 13B, Area #1 and Area #2 are formed within the coverage of TRP #1. Since Area #1 and Area #2 do not overlap each other, Area #1 and Area #2 have different SSB coverages. Accordingly, areas included in Area #1 or Area #2 do not share the same SSB but can share the same TRP/PCI.

In a configuration such as Option 0-3-2, the maximum number of second cells in the first cell may be the number of synchronization signals (SSB/SSB coverage). In addition, in a case where the second cell spans a plurality of SSB coverages, the maximum number of second cells in the first cell may be the number of SSBs (SSB groups) spanned.

### [Option 0-3-3]

Between a plurality of second cells, a synchronization signal and a TRP do not necessarily need to be shared. The UE may assume that it does not perform transmission/reception of a signal with respect to the same TRP and does not perform reception of the same (shared/common) synchronization signal in a plurality of different second cells.

In this case, the information included in the synchronization signal may be configurable as information dedicated to the second cell. In addition, in this case, the second cell may be identified using an index relating to the synchronization signal. Furthermore, in this case, the second cell may be identified using an ID relating to a TRP (an ID for identifying a TRP).

In Option 0-3-3, a PCI may be shared between a plurality of second cells.

In Option 0-3-3, the same PCI may be used between a plurality of second cells.

Fig. 13C is a diagram illustrating an example of an area pertaining to Option 0-3-3. In Fig. 13C, one cell including TRP #0 to TRP #3 is illustrated. In the example illustrated in Fig. 13C, Area #1 is formed within the coverage of TRP #2, and Area #2 is formed within the coverage of TRP #3. Since Area #1 and Area #2 do not overlap each other, Area #1 and Area #2 have different SSB coverages. Accordingly, areas included in Area #1 or Area #2 do not share the same SSB, do not share the same TRP, and can share the same PCI.

In a configuration such as Option 0-3-3, the maximum number of second cells in the first cell may be the number of TRPs. In addition, in a case where the second cell spans a plurality of TRPs, the maximum number of second cells in the first cell may be the number of TRPs (TRP groups) spanned.

### [Option 0-3-4]

Between a plurality of second cells, a synchronization signal, a TRP, and a PCI do not necessarily need to be shared. The UE may assume that it does not perform transmission/reception of a signal with respect to the same cell (first cell/PCI), transmission/reception of a signal with respect to the same TRP, and reception of the same (shared/common) synchronization signal in a plurality of different second cells.

In this case, the information included in the synchronization signal may be configurable as information dedicated to the second cell. In addition, in this case, the second cell may be identified using an index relating to the synchronization signal. Further, in this case, the second cell may be identified using an ID relating to a TRP (an ID for identifying a TRP). Furthermore, in this case, the second cell may be identified using a PCI.

In a configuration such as Option 0-3-4, the maximum number of second cells in the first cell may be one. Further, in a case where the second cell spans a plurality of first cells, the maximum number of second cells in total may be the number of first cells/PCIs (PCI groups) spanned.

Each of the above-described Options may be selected/determined based on the above-mentioned condition/trigger (e.g., a condition/trigger based on time/the number of UEs/traffic, and the like).

The change/update of each of the above-described Options may be configured/indicated/notified to the UE based on at least one of system information (e.g., SIB/MIB), higher layer signaling (RRC parameter/MAC CE), and DCI.

The change/update of each of the above-described Options may be performed based on the above-mentioned condition/trigger (e.g., a timer/event), or may be performed based on implementation of an NW/UE.

The ID in each of the above-described Options (e.g., at least one of an ID relating to a synchronization signal, an ID relating to a TRP, and a PCI) may be a global ID (e.g., common across NWs) or may be a local ID (e.g., dedicated to some NWs).

The number of a plurality of second cells (e.g., a maximum number) using at least one of an ID relating to the same synchronization signal, an ID relating to the same TRP, and the same PCI may be predefined in the specification, may be configured/indicated/notified to the UE using higher layer signaling (RRC/MAC CE)/DCI, may be determined based on reporting of UE capability information, or may be determined by combining at least two of these.

According to the present embodiment, a configuration pertaining to the second cell can be defined in detail and appropriately.

### << Connection Configuration and UE Operation using Second Cell >>

The second cell may be used in carrier aggregation (CA)/dual connectivity (DC) between a first frequency range (e.g., a low frequency range (e.g., an existing NR frequency range)) and a second frequency range (e.g., a high frequency range).

For example, the first cell and the second cell may be used in the first/second frequency ranges.

In a case where a certain cell (e.g., a primary cell (PCell)/special cell (SpCell)/primary secondary cell (PSCell))/a certain cell group (e.g., a master cell group (MCG)) corresponds to the first frequency range (in a case where a cell/cell group other than the certain cell/cell group corresponds to the second frequency range), the UE may perform BFR for an SCell regarding a BFR operation.

In a case where a certain cell (e.g., PCell/SpCell/PSCell)/a certain cell group (e.g., MCG) corresponds to the second frequency range (in a case where a cell/cell group other than the certain cell/cell group corresponds to the first frequency range), the UE may perform BFR/link recovery/cell change for a PCell regarding a BFR/link recovery/cell change operation.

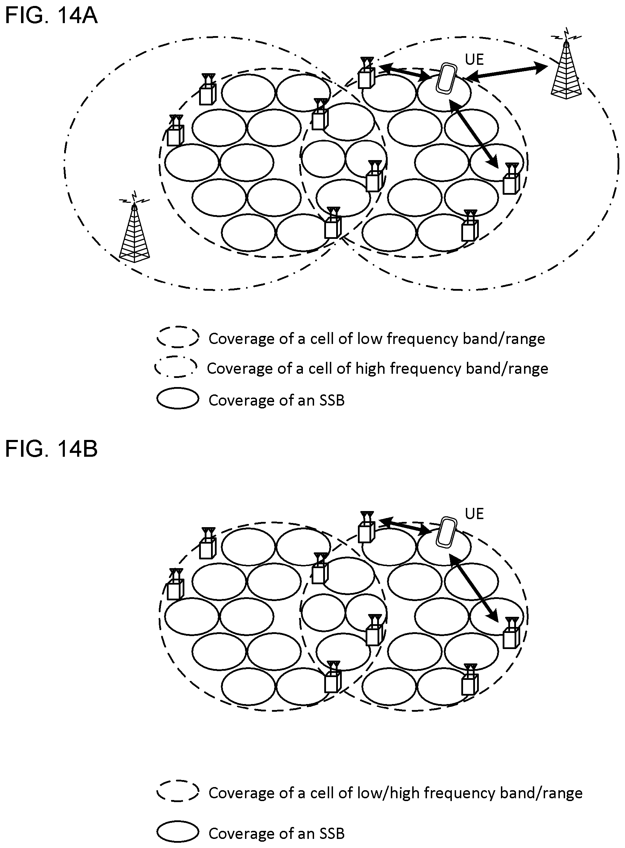

Fig. 14A is a diagram illustrating an example of a connection configuration using the second cell. In the example illustrated in Fig. 14A, the UE performs communication using CA/DC of a cell using a low frequency range and a first cell/second cell using a high frequency range.

Fig. 14B is a diagram illustrating another example of a connection configuration using the second cell. In the example illustrated in Fig. 14B, the UE performs communication using CA/DC of a first cell/second cell using a low frequency range and a first cell/second cell using a high frequency range.

In a case where a beam to which the UE is connected is no longer used, the UE may perform BFR/link recovery with respect to a certain cell/cell group.

For example, in a case where the UE is using a connection beam in a first cell/second cell using a high frequency range and the connection beam is no longer used, the UE may perform BFR/link recovery with respect to a cell using a low frequency range.

For example, in a case where the UE is using a connection beam in a first cell/second cell using a high frequency range and the connection beam is no longer used, the UE may perform BFR/link recovery with respect to another first cell/second cell using the high frequency range.

In a case where the second cell corresponding to a beam to which the UE is connected is changed, the UE may perform BFR with respect to a certain cell/cell group.

For example, in a case where the UE is using a connection beam in a second cell using a high frequency range and the second cell corresponding to the connection beam is changed, the UE may perform BFR/link recovery with respect to a cell using a low frequency range.

For example, in a case where the UE is using a connection beam in a second cell using a high frequency range and the second cell corresponding to the connection beam is changed, the UE may perform BFR with respect to another second cell using the high frequency range.

According to the present embodiment, even in a case of performing communication in a first cell/second cell, appropriate NW operation/UE operation can be defined.

As described above, according to Embodiment 0, an appropriate configuration of the first cell/second cell can be defined, and cell-free communication can be appropriately performed.

### <Embodiment 1>

In the present embodiment, detection of a change/update of the second cell will be described.

Embodiment 1 is broadly classified into Embodiments 1-1 and 1-2 below. The UE/NW may apply Embodiments 1-1/1-2 below individually, or may apply them in combination.

Further, the UE/NW may switch and apply modes corresponding to Embodiments 1-1/1-2 below based on a certain configuration/parameter/indication.

### <<Embodiment 1-1>>

The NW may notify the UE of a change/update pertaining to the second cell.

### [Option 1-1-A]

In a case where a change/update is made for the second cell, the UE may receive the change/update for the second cell using an explicit signal (e.g., system information (SIB/MIB)/higher layer signaling (RRC/MAC CE)/DCI) from the NW.

### [Option 1-1-B]

In a case where a change/update is made for the second cell, the UE may determine the change/update for the second cell using an implicit indication from the NW.

The implicit indication may be, for example, an indication relating to at least one of a certain random access channel (RACH) resource, an index relating to a certain synchronization signal (at least one of an SSB and an SS/PBCH block), a RACH preamble index, an ID relating to a beam (e.g., a TCI state), and information relating to a beam (e.g., a QCL source RS).

### [[Option 1-1-B-1]]

The UE may initiate a random access procedure with respect to a corresponding (indicated) second cell/reference signal/PCI based on the implicit indication.

### [[[Option 1-1-B-1-1]]]

The random access procedure may be, for example, a random access procedure of contention free random access (CFRA).

In a case where the UE is notified of the change/update of the second cell using a higher layer parameter, the UE may perform the CFRA using a RACH resource based on information included in the higher layer parameter (e.g., information relating to a RACH resource).

In a case where the UE is notified of the change/update of the second cell using a MAC CE/DCI, the UE may perform CFRA by selecting/determining a RACH resource from information included in a higher layer parameter (e.g., information relating to a RACH resource) received in advance.

### [[[Option 1-1-B-1-2]]]

The random access procedure may be, for example, a random access procedure of contention based random access (CBRA).

In a case where the UE is notified of the change/update of the second cell using a higher layer parameter, the UE may perform CBRA by selecting/determining a resource allocated for the CBRA (a RACH resource for the CBRA) from a RACH resource based on information included in the higher layer parameter (e.g., information relating to a RACH resource).

In a case where the UE is notified of the change/update of the second cell using a MAC CE/DCI, the UE may perform CBRA by selecting/determining a RACH resource for the CBRA from information included in a higher layer parameter (e.g., information relating to a RACH resource) received in advance.

Moreover, in Option 1-1-B-1, the RACH resource configured in advance using higher layer signaling may be a resource configured for the change/update of the second cell, or may be a resource configured for the first cell/a cell of a low frequency range.

Further, the random access procedure in the present disclosure may be a four-step random access or may be a two-step random access.

The UE may determine/assume that the change/update of the second cell is completed when the random access procedure is completed.

### [[Option 1-1-B-2]]

The UE may perform measurement with respect to a corresponding (indicated) second cell/reference signal/PCI based on the implicit indication.

The UE may determine a second cell/reference signal/PCI having the best quality (e.g., L1-RSRP/SINR) among the results of the measurement, and may perform switching to the second cell/reference signal/PCI.

Moreover, in this option, a configuration relating to a plurality of second cells (e.g., configuration of a reference signal/resource for measurement) may be notified to the UE using higher layer signaling (RRC signaling). The plurality of second cells may be a plurality of second cells within a first cell in which the UE is located, or may be a plurality of second cells within one or more first cells including a second cell in which the UE is located.

### [[Option 1-1-B-3]]

The UE may perform switching, based on the implicit indication, to a beam of a corresponding (indicated) second cell/PCI (e.g., a QCL source RS pertaining to a TCI state), or a beam of a certain (e.g., default) second cell/PCI (e.g., a QCL source RS pertaining to a TCI state).

Moreover, in this option, configurations relating to a plurality of second cells (configuration relating to a beam) may be notified to the UE using higher layer signaling (RRC signaling). The plurality of second cells may be a plurality of second cells within a first cell in which the UE is located, or may be a plurality of second cells within one or more first cells including a second cell in which the UE is located.

### [[Option 1-1-B-4]]

The UE may perform correction/modification/update of an RRC configuration of a corresponding (indicated) second cell/PCI, or an RRC configuration of a certain (e.g., default) second cell/PCI based on the implicit indication.

Moreover, in this option, configurations relating to a plurality of second cells (configuration relating to a beam) may be notified to the UE using higher layer signaling (RRC signaling). The plurality of second cells may be a plurality of second cells within a first cell in which the UE is located, or may be a plurality of second cells within one or more first cells including a second cell in which the UE is located.

Further, the UE may hold a configuration relating to a PCI shared by a plurality of second cells.

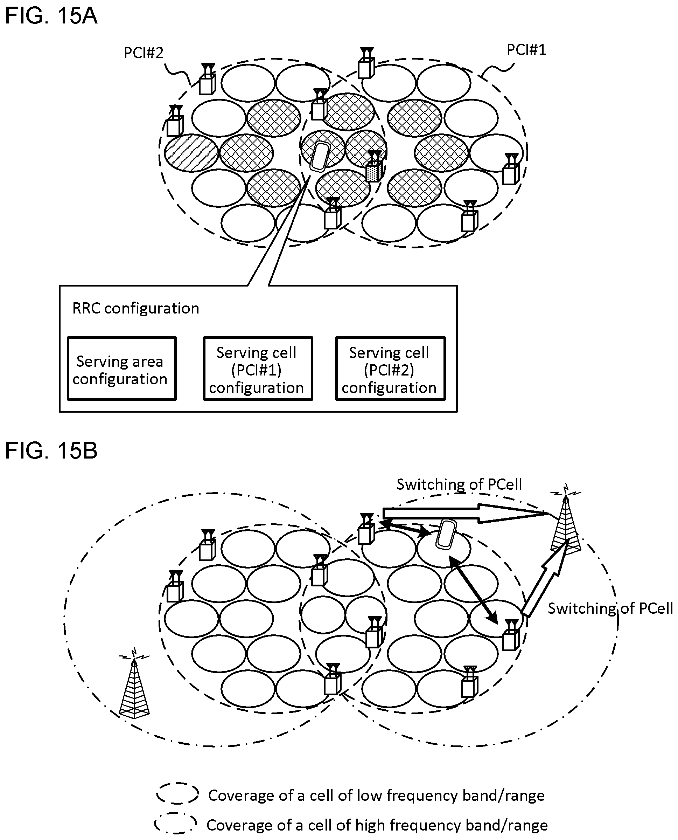

Fig. 15A is a diagram illustrating an example of a configuration of a first cell/second cell according to Embodiment 1. In the example illustrated in Fig. 15A, a UE is located within a second cell spanning a first cell of PCI #1 and a first cell of PCI #2. In the example illustrated in Fig. 15A, the first cell of PCI #1 and the first cell of PCI #2 overlap.

In this case, the UE receives, as an RRC configuration, in addition to a serving cell configuration relating to PCI #1 and a serving cell configuration relating to PCI #2, a configuration of the second cell (serving area configuration) in which the UE is located.

The UE may perform an operation pertaining to the above-described Option 1-1-B-1/1-1-B-2/1-1-B-3 after correction/modification/update of the RRC configuration.

### [[Option 1-1-B-5]]

The UE may reset an already configured RRC configuration based on the implicit indication. Then, the UE may perform a reselection operation of a first cell/second cell (e.g., measurement of a Synchronization Signal Block/SSB).

The UE may perform measurement for a plurality (e.g., all) of first cells/second cells. The UE may attempt to establish an RRC connection for a first cell/second cell having the best quality (e.g., L1-RSRP/SINR) among the results of the measurement.

### [[Option 1-1-B-6]]

The UE may perform cell switching based on the implicit indication.

The UE may be connected to different second cells/frequencies/PCIs for a PCell and a certain cell (e.g., a secondary cell (SCell)/SpCell).

The switching of the cell may mean, for example, switching a certain cell (e.g., SCell/SpCell) to which the UE is already connected, to a PCell.

A target cell to which the cell is switched may be predefined in the specification, may be configured/indicated/notified to the UE using higher layer signaling (RRC/MAC CE)/DCI, or may be determined by a combination thereof.

Fig. 15B is a diagram illustrating an example of switching between a first cell/second cell according to Embodiment 1. In the example illustrated in Fig. 15B, the UE uses the second cell as a PCell in advance.

As illustrated in Fig. 15B, in a case of performing switching of a cell, the UE performs switching such that a cell other than the first cell/the second cell (e.g., a cell of a low frequency range (e.g., NR frequency range)) is set as a PCell.

### [[Option 1-1-B-7]]

Even in a case where the implicit indication is received, the UE need not necessarily assume/expect that a beam being connected becomes unavailable or that the beam being connected is changed to a beam for another second cell.

Hereinafter, a change operation of the second cell in the UE will be described.

The UE, after completing the RACH operation based on a notification from the NW, may apply a configuration relating to a changed second cell/PCI/TRP/synchronization signal (e.g., SSB) after a lapse of a certain duration (e.g., X slots/symbols/ms). Then, the UE may perform transmission/reception of a channel/signal (e.g., PUCCH/PUSCH/SRS/PDCCH/PDSCH/CSI-RS) in the changed second cell.

The UE (e.g., in a case of performing an operation other than RACH) may apply a configuration relating to a changed second cell/PCI/TRP/synchronization signal (e.g., SSB) after a lapse of a certain duration (e.g., X slots/symbols/ms) from a certain symbol (e.g., a symbol in which a notification from the NW is received, or a symbol in which a response signal (HARQ-ACK) for the notification is transmitted). Then, the UE may perform transmission/reception of a channel/signal (e.g., PUCCH/PUSCH/SRS/PDCCH/PDSCH/CSI-RS) in the changed second cell.

The configuration relating to the changed second cell/PCI/TRP/synchronization signal may be, for example, a configuration relating to a beam (TCI state/QCL information)/search space/CORESET/BWP.

The certain duration (e.g., X) may be predefined in the specification, may be configured/indicated/notified to the UE using higher layer signaling (RRC/MAC CE)/DCI, may be determined based on UE capability information, or may be determined by a combination of at least two of these.

As described above, according to Embodiment 1-1, a change of the second cell can be appropriately determined based on an indication from the NW.

### <<Embodiment 1-2>>

The UE may notify a modification/update pertaining to the second cell without receiving a notification from the NW.

The UE may receive a configuration relating to a reference signal for measurement in advance.

In a case where reception quality of a reference signal (e.g., L1-RSRP/SINR) is lower than a certain threshold, the UE may perform an operation pertaining to a modification/update of the second cell. Moreover, in a case where the UE obtains a measurement result lower than the certain threshold, the UE may determine that the modification/update pertaining to the second cell is detected.

The certain threshold may be predefined in the specification or may be configured to the UE using higher layer signaling.

In the operation pertaining to the modification/update of the second cell, for example, first, the UE may notify a higher layer and initiate incrementing a certain counter (e.g., a counter for change of the second cell).

In a case in which incrementing of the counter is not triggered by a lower layer within a certain time, the UE may reset the counter.

The certain time may be predefined in the specification or may be configured to the UE using higher layer signaling.

In a case where the counter exceeds a certain number of times, the UE may perform an operation pertaining to at least one of Options 1-2-1 to 1-2-4 described below. The certain number of times may be predefined in the specification or may be configured to the UE using higher layer signaling.

### [Option 1-2-1]

The UE may perform measurement for a plurality of second cells/reference signals/PCIs.

Configurations relating to a plurality of second cells (e.g., configurations of a reference signal/resource for measurement) may be notified to the UE using higher layer signaling (RRC signaling). The plurality of second cells may be a plurality of second cells within a first cell in which the UE is located, or may be a plurality of second cells within one or more first cells including a second cell in which the UE is located.

The UE may determine a second cell/reference signal/PCI having the best quality (e.g., L1-RSRP/SINR) among the results of the measurement and may perform switching to the second cell/reference signal/PCI. After the switching, the UE may perform an operation pertaining to at least one of Options 1-2-1-1 to 1-2-1-3 described below.

### [[Option 1-2-1-1]]

The UE may perform a random access procedure pertaining to CFRA with respect to the switched second cell.

The UE may be configured with a RACH resource pertaining to the random access procedure using RRC signaling in advance.

### [[Option 1-2-1-2]]

The UE may perform a random access procedure pertaining to CBRA with respect to the switched second cell.

Regarding a RACH resource pertaining to the random access procedure, the UE may select/determine a resource to be used from a RACH resource pertaining to CBRA configured using RRC signaling in advance.

Moreover, in Option 1-2-1-1/1-2-1-2, a RACH resource configured in advance using higher layer signaling may be a resource configured for the modification/update of the second cell or may be a resource configured for the first cell/a cell of a low frequency range.

Further, the random access procedure in the present disclosure may be a four-step random access or may be a two-step random access.

### [[Option 1-2-1-3]]

The UE may perform correction/modification/update of an RRC configuration of a second cell/PCI or an RRC configuration of a certain (e.g., default) second cell/PCI based on the selected second cell/PCI.

Moreover, in this option, configurations relating to a plurality of second cells (configuration relating to a beam) may be notified to the UE using higher layer signaling (RRC signaling). The plurality of second cells may be a plurality of second cells within a first cell in which the UE is located, or may be a plurality of second cells within one or more first cells including a second cell in which the UE is located.

Further, the UE may hold a configuration relating to a PCI shared by a plurality of second cells.

The UE may perform an operation pertaining to the above-described Option 1-2-1-1/1-2-1-2 after correction/modification/update of the RRC configuration.

### [Option 1-2-2]

The UE may reset the already configured RRC configuration. Then, the UE may perform a reselection operation of a first cell/second cell (e.g., measurement of a Synchronization Signal Block/SSB).

The UE may perform measurement for a plurality (e.g., all) of first cells/second cells. The UE may attempt to establish an RRC connection for a first cell/second cell having the best quality (e.g., L1-RSRP/SINR) among the results of the measurement.

### [Option 1-2-3]

The UE may perform switching of a cell.

The UE may be connected to different second cells/frequencies/PCIs for a PCell and a certain cell (e.g., SCell/SpCell).

The switching of the cell may mean, for example, switching a certain cell (e.g., SCell/SpCell) to which the UE is already connected, to a PCell.

A target cell to which the cell is switched may be predefined in the specification, may be configured/indicated/notified to the UE using higher layer signaling (RRC/MAC CE)/DCI, or may be determined by a combination thereof.

### [Option 1-2-4]

The UE need not necessarily assume/expect that a beam to which the UE is connected becomes unavailable or that the beam to which the UE is connected is changed to a beam for another second cell.

Hereinafter, a change operation of the second cell in the UE will be described.

The UE, after completing the RACH operation, may apply a configuration relating to the changed second cell/PCI/TRP/synchronization signal (e.g., SSB) after a lapse of a certain duration (e.g., X slots/symbols/ms). Then, the UE may perform transmission/reception of a channel/signal (e.g., PUCCH/PUSCH/SRS/PDCCH/PDSCH/CSI-RS) in the changed second cell.

The UE (e.g., in a case of performing an operation other than RACH) may apply a configuration relating to the changed second cell/PCI/TRP/synchronization signal (e.g., SSB) after a lapse of a certain duration (e.g., X slots/symbols/ms) from a certain symbol (e.g., a symbol in which a change of the second cell is detected). Then, the UE may perform transmission/reception of a channel/signal (e.g., PUCCH/PUSCH/SRS/PDCCH/PDSCH/CSI-RS) in the changed second cell.

The configuration relating to the changed second cell/PCI/TRP/synchronization signal may be, for example, a configuration relating to a beam (TCI state/QCL information)/search space/CORESET/BWP.

The certain duration (e.g., X) may be predefined in the specification, may be configured/indicated/notified to the UE using higher layer signaling (RRC/MAC CE)/DCI, may be determined based on UE capability information, or may be determined by a combination of at least two of these.

As described above, according to Embodiment 1-2, a change of the second cell can be appropriately determined even in a case where a notification from the NW is not received.

As described above, according to Embodiment 1, an operation pertaining to a modification/update of the second cell can be appropriately performed.

### <Embodiment 2>

Embodiment 2 relates to a method of identifying a change of the second cell and an existing BF/RLF.

The UE may determine, based on a certain method, whether a change of the second cell or an existing BF/RLF has occurred.

The present embodiment may be applied, for example, together with Embodiment 1-2 described above.

### <<Option 2-1>>

The UE may be separately configured with a resource for detection (e.g., a reference signal/reference signal resource) for a modification/update of the second cell and a resource for detection (e.g., a reference signal/reference signal resource) for BFD/RLM.

The configuration may be performed, for example, using RRC signaling.

The resource for detection (e.g., a reference signal/reference signal resource) for the modification/update of the second cell and the resource for detection (e.g., a reference signal/reference signal resource) for BFD/RLM may be different resources, or some of them may be common resources.

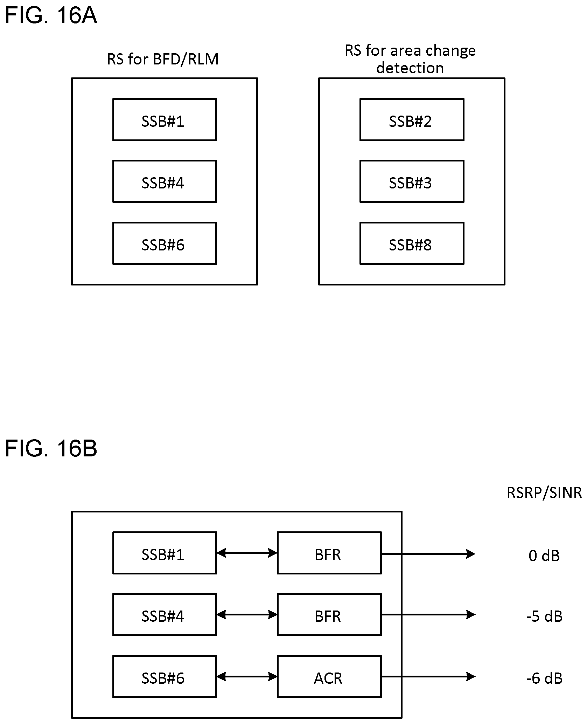

Fig. 16A is a diagram illustrating an example of a resource configuration pertaining to Option 2-1 of Embodiment 2. In the example illustrated in Fig. 16A, a reference signal for BFD/RLM (SSB #1/#4/#6) and a reference signal for detection of the modification/update of the second cell (SSB #2/#3/#8) are configured for the UE.

The UE determines, based on measurements of different reference signals illustrated in Fig. 16A, whether a change of the second cell or an existing BF/RLF has occurred.

### <<Option 2-2>>

The UE may be commonly configured with a resource for detection (e.g., a reference signal/reference signal resource) for the modification/update of the second cell and a resource for detection (e.g., a reference signal/reference signal resource) for BFD/RLM.

The configuration may be performed, for example, using RRC signaling.

For example, a plurality of reference signals may be configured for the UE, and usage (e.g., for BFR/RLF or area change recovery (ACR)) may be configured for each of the plurality of reference signals.

The UE may use the same procedure as that of BFR/RLF for a procedure/recovery of the change of the second cell (Option 2-2-1).

The UE may determine, based on a reference signal/PCI having the best quality (e.g., L1-RSRP/SINR) measured during the procedure/recovery of the change of the second cell (Option 2-2-2), whether a change of the second cell or an existing BF/RLF has occurred.

In Option 2-2-2, a reference signal/PCI that can correspond to the change of the second cell may be configured for the UE in advance.

For example, in a case where the reference signal detected by the UE is a reference signal for BFR/RLF, the UE may determine that an existing BF/RLF has occurred, and otherwise, the UE may determine that a change of the second cell has occurred.

Fig. 16B is a diagram illustrating an example of a resource configuration pertaining to Option 2-2-2 of Embodiment 2. In the example illustrated in Fig. 16B, reference signals (SSB #1/#4/#6) are configured for the UE. Further, for the UE, SSB #1 and #4 are configured for BFR, and SSB #6 is configured for ACR.

The UE determines, based on measurement of a reference signal, whether a change of the second cell or an existing BF/RLF has occurred. In the example illustrated in Fig. 16B, the UE performs measurements of SSB #1/#4/#6 and determines that SSB #1 has the best quality. Given that SSB #1 is a reference signal for BFR, the UE determines that an existing BF/RLF has occurred.

As described above, according to Embodiment 2, it can be appropriately determined whether a change of the second cell or an existing BF/RLF has occurred.

### <Supplement>

### [Notification of Information to UE]

Notification of any information to a UE (from a network (NW) (e.g., a base station (BS))) in the above-described embodiments (i.e., reception of any information from the BS in the UE) may be performed using physical layer signaling (e.g., DCI), higher layer signaling (e.g., RRC signaling, MAC CE), a certain signal/channel (e.g., PDCCH, PDSCH, a reference signal), or a combination thereof.

In a case where the notification is performed by MAC CE, the MAC CE may be identified by including, in a MAC subheader, a new logical channel ID (LCID) not defined in existing standards.

In a case where the notification is performed by the DCI, the notification may be performed by a certain field of the DCI, a radio network temporary identifier (RNTI) used for scrambling cyclic redundancy check (CRC) bits added to the DCI, a format of the DCI, or the like.

Further, the notification of any information to the UE in the above-described embodiments may be performed periodically, semi-persistently, or aperiodically.

### [Notification of Information from UE]

Notification of any information from a UE (to a NW) in the above-described embodiments (i.e., transmission/reporting of any information to a BS in the UE) may be performed using physical layer signaling (e.g., UCI), higher layer signaling (e.g., RRC signaling, MAC CE), a certain signal/channel (e.g., PUCCH, PUSCH, PRACH, a reference signal), or a combination thereof.

In a case where the notification is performed by MAC CE, the MAC CE may be identified by including, in a MAC subheader, a new LCID not defined in existing standards.

In a case where the notification is performed by the UCI, the notification may be transmitted using a PUCCH or a PUSCH.

Further, the notification of any information from the UE in the above-described embodiments may be performed periodically, semi-persistently, or aperiodically.

### [Application of Each Embodiment]

At least one of the above-described embodiments may be applied in a case where a certain condition is satisfied. The certain condition may be defined in a standard or may be notified to the UE/BS using higher layer signaling/physical layer signaling.

At least one of the above-described embodiments may be applied only to a UE that has reported a certain UE capability or a UE that supports the certain UE capability.

The certain UE capability may indicate support for certain processing/operation/control/information for at least one of the above-described embodiments.

Further, the certain UE capability may be a capability applied over all frequencies (commonly regardless of frequency), may be a capability for each frequency (e.g., one or a combination of a cell, a band, a band combination, a BWP, a component carrier, and the like), may be a capability for each frequency range (e.g., frequency range 1 (FR1), FR2, FR3, FR4, FR5, FR2-1, FR2-2), may be a capability for each subcarrier spacing (SCS), or may be a capability for each feature set (FS) or feature set per component-carrier (FSPC).

Further, the certain UE capability may be a capability applied over all duplex schemes (commonly regardless of a duplex scheme), or may be a capability for each duplex scheme (e.g., time division duplex (TDD), frequency division duplex (FDD)).

Further, at least one of the above-described embodiments may be applied in a case where the UE is configured/activated/triggered with certain information relating to the above-described embodiments (or to perform the operation of the above-described embodiments) by higher layer signaling/physical layer signaling. For example, the certain information may be information representing enabling a cell-free operation, any RRC parameter for a certain release (e.g., Rel. 20 or later), or the like.

In a case where the UE does not support at least one of the certain UE capabilities described above or is not configured with the certain information, for example, operations defined in Rel. 15-19 may be applied.

### (Supplementary Notes)

Regarding one embodiment of the present disclosure, the following supplementary notes of the invention will be given.

### [Supplementary note 1-1]

A terminal including: a receiving section that receives configuration information relating to a cell with a changed physical range; and a control section that controls transmission/reception of a signal using the cell based on the configuration information.

### [Supplementary note 1-2]

The terminal according to Supplementary Note 1-1, wherein the number of physical cell identifiers for each of the cells, the number of transmission and reception points for each of the cells, and the number of synchronization signals for each of the cells are one or more.

### [Supplementary note 1-3]

The terminal according to Supplementary Note 1-1 or 1-2, wherein the cell is included in a cell with an unchanged physical range, and such cells with the unchanged physical range are capable of overlapping with each other.

### [Supplementary note 1-4]

The terminal according to any one of Supplementary Notes 1-1 to 1-3, wherein a plurality of the cells share at least one of an identifier of an identical synchronization signal, an identifier of an identical transmission and reception point, and an identical physical cell identifier.

### [Supplementary note 2-1]

A terminal including: a receiving section that receives information relating to an update of a cell with a changed physical range; and a control section that controls an operation of updating the cell based on the information.

### [Supplementary note 2-2]

The terminal according to Supplementary Note 2-1, wherein the control section performs, as the operation, a random access procedure for an update target cell.

### [Supplementary note 2-3]

The terminal according to Supplementary Note 2-1 or 2-2, wherein the control section performs, as the operation, measurement relating to an update target cell.

### [Supplementary note 2-4]

The terminal according to any one of Supplementary Notes 2-1 to 2-3, wherein the control section performs, as the operation, updating or resetting of a Radio Resource Control (RRC) configuration relating to a pre-update cell.

### [Supplementary note 3-1]

A terminal including: a receiving section that performs measurement of a reference signal relating to an update of a cell with a changed physical range; and a control section that controls an operation of updating the cell based on the measurement.

### [Supplementary note 3-2]

The terminal according to Supplementary Note 3-1, wherein the control section performs, as the operation, a random access procedure for an update target cell.

### [Supplementary note 3-3]

The terminal according to Supplementary Note 3-1 or 3-2, wherein the control section performs, as the operation, updating or resetting of a Radio Resource Control (RRC) configuration relating to a pre-update cell.

### [Supplementary note 3-4]

The terminal according to any one of Supplementary Notes 3-1 to 3-3, wherein the control section determines, based on the reference signal, whether an update of the cell or a beam failure has occurred.

### (Wireless Communication System)

Hereinafter, a configuration of a wireless communication system according to one embodiment of the present disclosure will be described. In such a wireless communication system, communication is performed using any one of the wireless communication methods according to each of the above-described embodiments of the present disclosure or a combination thereof.

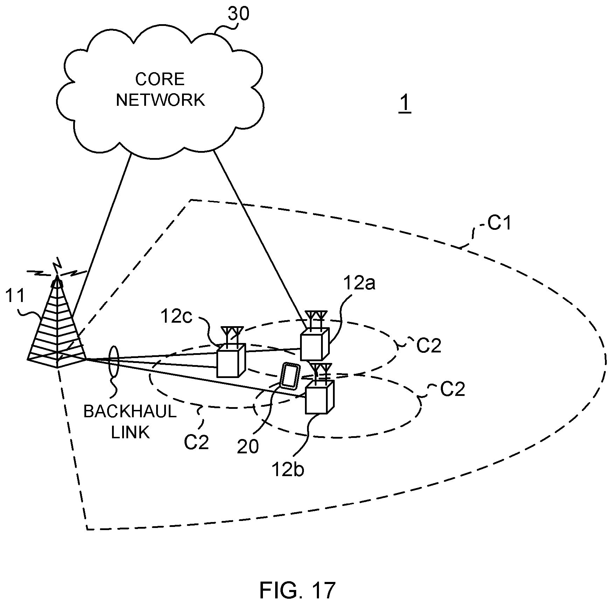

Fig. 17 is a diagram illustrating an example of a schematic configuration of a wireless communication system according to an embodiment. A wireless communication system 1 (which may be simply referred to as a system 1) may be a system that implements communication using Long Term Evolution (LTE), 5th generation mobile communication system New Radio (5G NR), or the like specified by the Third Generation Partnership Project (3GPP).

Further, the wireless communication system 1 may support dual connectivity between a plurality of Radio Access Technologies (RATs) (Multi-RAT Dual Connectivity (MR-DC)). The MR-DC may include dual connectivity between LTE (Evolved Universal Terrestrial Radio Access (E-UTRA)) and NR (E-UTRA-NR Dual Connectivity (EN-DC)), dual connectivity between NR and LTE (NR-E-UTRA Dual Connectivity (NE-DC)), and the like.

In the EN-DC, a base station (eNB) of LTE (E-UTRA) is a master node (MN), and a base station (gNB) of NR is a secondary node (SN). In the NE-DC, a base station (gNB) of NR is an MN, and a base station (eNB) of LTE (E-UTRA) is an SN.

The wireless communication system 1 may support dual connectivity between a plurality of base stations within the same RAT (e.g., dual connectivity in which both an MN and an SN are base stations (gNBs) of NR (NR-NR Dual Connectivity (NN-DC))).

The wireless communication system 1 may include a base station 11 that forms a macro cell C1 having a relatively wide coverage, and base stations 12 (12a to 12c) that are arranged within the macro cell C1 and form small cells C2 narrower than the macro cell C1. A user terminal 20 may be located within at least one cell. The arrangement, number, and the like of each cell and the user terminal 20 are not limited to the aspects illustrated in the figure. Hereinafter, in a case where the base stations 11 and 12 are not distinguished, they are collectively referred to as a base station 10.

The user terminal 20 may be connected to at least one of a plurality of base stations 10. The user terminal 20 may use at least one of carrier aggregation (CA), which uses a plurality of component carriers (CCs), and dual connectivity (DC).

Each CC may be included in at least one of a first frequency range (Frequency Range 1 (FR1)) and a second frequency range (Frequency Range 2 (FR2)). The macro cell C1 may be included in the FR1, and the small cell C2 may be included in the FR2. For example, the FR1 may be a frequency range of 6 GHz or less (sub-6 GHz), and the FR2 may be a frequency range higher than 24 GHz (above-24 GHz). Moreover, the frequency ranges, definitions, and the like of the FR1 and the FR2 are not limited thereto, and for example, the FR1 may correspond to a frequency range higher than the FR2.

Further, the user terminal 20 may perform communication using at least one of time division duplex (TDD) and frequency division duplex (FDD) in each CC.

The plurality of base stations 10 may be connected via wired (e.g., an optical fiber compliant with common public radio interface (CPRI), an X2 interface, or the like) or via wireless (e.g., NR communication). For example, in a case where NR communication is used as a backhaul between the base stations 11 and 12, the base station 11 corresponding to an upper node may be referred to as an Integrated Access Backhaul (IAB) donor, and the base station 12 corresponding to a relay station (relay) may be referred to as an IAB node.

The base station 10 may be connected to a core network 30 via another base station 10 or directly. The core network 30 may include, for example, at least one of Evolved Packet Core (EPC), 5G Core Network (5GCN), Next Generation Core (NGC), and the like.

The core network 30 may include network functions (NFs) such as, for example, a User Plane Function (UPF), an Access and Mobility Management Function (AMF), a Session Management Function (SMF), a Unified Data Management (UDM), an Application Function (AF), a Data Network (DN), a Location Management Function (LMF), and Operation, Administration, and Maintenance (Management) (OAM). Moreover, a plurality of functions may be provided by one network node. In addition, communication with an external network (e.g., the Internet) may be performed via a DN.

The user terminal 20 may be a terminal corresponding to at least one of communication schemes such as LTE, LTE-A, and 5G.

In the wireless communication system 1, an Orthogonal Frequency Division Multiplexing (OFDM)-based radio access scheme may be used. For example, in at least one of a downlink (DL) and an uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access scheme may also be referred to as a waveform. Moreover, in the wireless communication system 1, other radio access schemes (e.g., other single-carrier transmission schemes or other multi-carrier transmission schemes) may be used for the radio access schemes for the UL and the DL.

In the wireless communication system 1, as a downlink channel, a downlink shared channel (Physical Downlink Shared Channel (PDSCH)) shared by each user terminal 20, a broadcast channel (Physical Broadcast Channel (PBCH)), a downlink control channel (Physical Downlink Control Channel (PDCCH)), or the like may be used.

Further, in the wireless communication system 1, as an uplink channel, an uplink shared channel (Physical Uplink Shared Channel (PUSCH)) shared by each user terminal 20, an uplink control channel (Physical Uplink Control Channel (PUCCH)), a random access channel (Physical Random Access Channel (PRACH)), or the like may be used.

User data, higher layer control information, a system information block (SIB), and the like are transmitted via a PDSCH. User data, higher layer control information, and the like may be transmitted via a PUSCH. Further, a master information block (MIB) may be transmitted via a PBCH.

Lower layer control information may be transmitted via a PDCCH. The lower layer control information may include, for example, Downlink Control Information (DCI) including scheduling information of at least one of the PDSCH and the PUSCH.

Moreover, the DCI that schedules the PDSCH may be referred to as a DL assignment, a DL DCI, or the like, and the DCI that schedules the PUSCH may be referred to as a UL grant, a UL DCI, or the like. Moreover, the PDSCH may be used interchangeably with DL data, and the PUSCH may be used interchangeably with UL data.

For detection of the PDCCH, a control resource set (CORESET) and a search space may be used. The CORESET corresponds to a resource for searching for the DCI. The search space corresponds to a search region and a search method for PDCCH candidates. One CORESET may be associated with one or more search spaces. The UE may monitor a CORESET relating to a search space based on a search space configuration.

One search space may correspond to PDCCH candidates corresponding to one or more aggregation levels. One or more search spaces may be referred to as a search space set. Moreover, "search space", "search space set", "search space configuration", "search space set configuration", "CORESET", "CORESET configuration", and the like in the present disclosure may be interchangeably used.

Uplink Control Information (UCI) including at least one of Channel State Information (CSI), delivery acknowledgment information (which may be referred to as, for example, Hybrid Automatic Repeat reQuest ACKnowledgement (HARQ-ACK), ACK/NACK, or the like), and a Scheduling Request (SR) may be transmitted via a PUCCH. A random access preamble for establishing a connection with a cell may be transmitted via a PRACH.

Moreover, in the present disclosure, a downlink, an uplink, and the like may be expressed without attaching the term "link". Further, various channels may be expressed without attaching the term "Physical" to the beginning thereof.

In the wireless communication system 1, a synchronization signal (SS), a downlink reference signal (DL-RS), and the like may be transmitted. In the wireless communication system 1, as a DL-RS, a Cell-specific Reference Signal (CRS), a Channel State Information Reference Signal (CSI-RS), a Demodulation Reference Signal (DMRS), a Positioning Reference Signal (PRS), a Phase Tracking Reference Signal (PTRS), or the like may be transmitted.

The synchronization signal may be, for example, at least one of a Primary Synchronization Signal (PSS) and a Secondary Synchronization Signal (SSS). A signal block including an SS (PSS, SSS), a PBCH (and a DMRS for the PBCH), and the like may be referred to as an SS/PBCH block, an SS Block (SSB), or the like. Moreover, an SS, an SSB, and the like may also be referred to as reference signals.

Further, in the wireless communication system 1, as a Uplink Reference Signal (UL-RS), a Sounding Reference Signal (SRS), a Demodulation Reference Signal (DMRS), or the like may be transmitted. Moreover, the DMRS may also be referred to as a user terminal-specific reference signal (UE-specific Reference Signal).

### (Base Station)

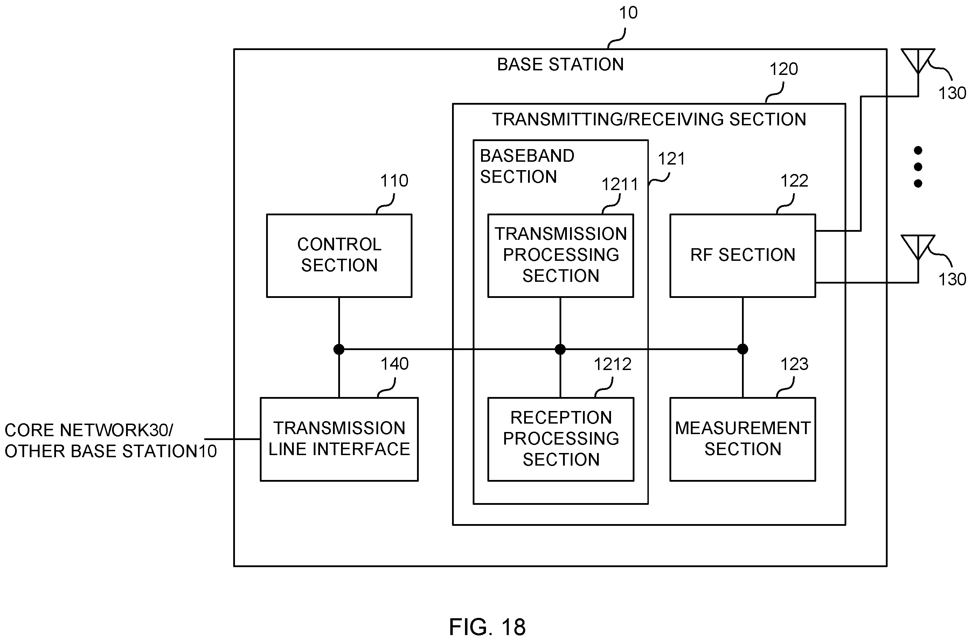

Fig. 18 is a diagram illustrating an example of a configuration of a base station according to an embodiment. The base station 10 includes a control section 110, a transmitting/receiving section 120, a transmitting/receiving antenna 130, and a transmission line interface 140. Moreover, one or more of the control section 110, the transmitting/receiving section 120, the transmitting/receiving antenna 130, and the transmission line interface 140 may be provided.

Moreover, the present example mainly illustrates functional blocks of feature portions in the present embodiment, and it may be assumed that the base station 10 also includes other functional blocks necessary for wireless communication. A part of processing of each section described below may be omitted.

The control section 110 implements control of the entire base station 10. The control section 110 can include a controller, a control circuit, or the like described on the basis of common general knowledge in the technical field according to the present disclosure.

The control section 110 may control generation of a signal, scheduling (e.g., resource allocation or mapping), and the like. The control section 110 may control transmission/reception, measurement, and the like using the transmitting/receiving section 120, the transmitting/receiving antenna 130, and the transmission line interface 140. The control section 110 may generate data, control information, a sequence, and the like to be transmitted as a signal, and may transfer the generated data, control information, sequence, and the like to the transmitting/receiving section 120. The control section 110 may perform call processing (configuration, release, etc.) of a communication channel, state management of the base station 10, management of radio resources, and the like.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmitting/receiving circuit, and the like described on the basis of common general knowledge in the technical field according to the present disclosure.

The transmitting/receiving section 120 may be configured as an integrated transmitting/receiving section, or may be configured as a transmitting section and a receiving section. The transmitting section may include the transmission processing section 1211 and the RF section 122. The receiving section may include the reception processing section 1212, the RF section 122, and the measurement section 123.

The transmitting/receiving antenna 130 can include an antenna described on the basis of common general knowledge in the technical field according to the present disclosure, for example, an array antenna or the like.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam using digital beamforming (e.g., precoding), analog beamforming (e.g., phase rotation), or the like.

The transmitting/receiving section 120 (transmission processing section 1211) may perform, on data, control information, and the like acquired from the control section 110, for example, processing of a Packet Data Convergence Protocol (PDCP) layer, processing of a Radio Link Control (RLC) layer (e.g., RLC retransmission control), processing of a Medium Access Control (MAC) layer (e.g., HARQ retransmission control), and the like, and may generate a bit string to be transmitted.

The transmitting/receiving section 120 (transmission processing section 1211) may perform transmission processing such as channel coding (which may include error correction coding), modulation, mapping, filtering processing, discrete Fourier transform (DFT) processing (as necessary), inverse fast Fourier transform (IFFT) processing, precoding, and digital-to-analog conversion on the bit string to be transmitted, and may output a baseband signal.

The transmitting/receiving section 120 (RF section 122) may perform modulation in a radio frequency range, filtering processing, amplification, and the like on the baseband signal, and may transmit a signal in the radio frequency range via the transmitting/receiving antenna 130.

On the other hand, the transmitting/receiving section 120 (RF section 122) may perform amplification, filtering processing, demodulation into a baseband signal, and the like on a signal in the radio frequency range received by the transmitting/receiving antenna 130.

The transmitting/receiving section 120 (reception processing section 1212) may apply reception processing such as analog-to-digital conversion, fast Fourier transform (FFT) processing, inverse discrete Fourier transform (IDFT) processing (as necessary), filtering processing, demapping, demodulation, decoding (which may include error correction decoding), MAC layer processing, RLC layer processing, and PDCP layer processing to the acquired baseband signal, and may acquire user data and the like.

The transmitting/receiving section 120 (measurement section 123) may implement measurement on a received signal. For example, the measurement section 123 may perform radio resource management (RRM) measurement, Channel State Information (CSI) measurement, and the like based on the received signal. The measurement section 123 may measure received power (e.g., reference signal received power (RSRP)), received quality (e.g., reference signal received quality (RSRQ), signal-to-interference-plus-noise ratio (SINR), signal to noise ratio (SNR)), signal strength (e.g., received signal strength indicator (RSSI)), propagation path information (e.g., CSI), and the like. The measurement results may be output to the control section 110.

The transmission line interface 140 performs transmission and reception of signals (backhaul signaling) to and from an apparatus included in the core network 30 (e.g., a network node providing an NF), another base station 10, or the like, and may acquire, transmit, or the like user data (user plane data), control plane data, or the like for the user terminal 20.

Moreover, in the present disclosure, the transmitting section and the receiving section of the base station 10 may include at least one of the transmitting/receiving section 120, the transmitting/receiving antenna 130, and the transmission line interface 140.

The transmitting/receiving section 120 may transmit configuration information relating to a cell with a changed physical range. The control section 110 may control transmission and reception of a signal using the cell based on the configuration information (Embodiment 0).

The transmitting/receiving section 120 may transmit information relating to an update of a cell with a changed physical range. The control section 110 may instruct an operation for updating the cell using the information (Embodiment 1).

The transmitting/receiving section 120 may transmit a reference signal relating to an update of a cell with a changed physical range. The control section 110 may instruct an operation for updating the cell selected based on the measurement (Embodiment 1).

### (User Terminal)

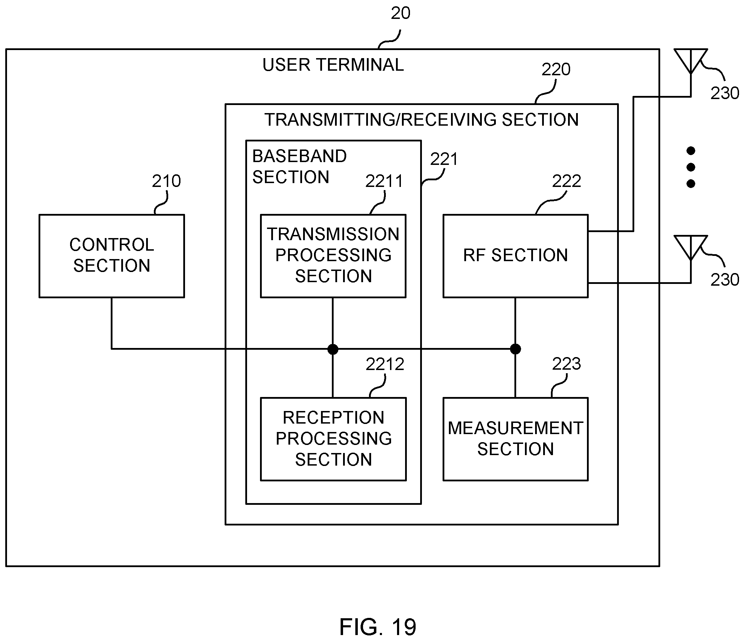

Fig. 19 is a diagram illustrating an example of a configuration of a user terminal according to one embodiment. The user terminal 20 includes a control section 210, a transmitting/receiving section 220, and a transmitting/receiving antenna 230. Moreover, one or more control sections 210, one or more transmitting/receiving sections 220, and one or more transmitting/receiving antennas 230 may be provided.

Moreover, the present example mainly illustrates functional blocks of feature portions in the present embodiment, and the user terminal 20 may be assumed to include other functional blocks necessary for wireless communication. A part of processing of each section described below may be omitted.

The control section 210 implements control of the entire user terminal 20. The control section 210 can include a controller, a control circuit, or the like described on the basis of common general knowledge in the technical field according to the present disclosure.

The control section 210 may control signal generation, mapping, or the like. The control section 210 may control transmission/reception, measurement, and the like using the transmitting/receiving section 220 and the transmitting/receiving antenna 230. The control section 210 may generate data, control information, a sequence, and the like to be transmitted as a signal, and may transfer them to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmitting/receiving circuit, and the like described on the basis of common general knowledge in the technical field according to the present disclosure.

The transmitting/receiving section 220 may be configured as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna described on the basis of common general knowledge in the technical field according to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam using digital beamforming (e.g., precoding), analog beamforming (e.g., phase rotation), or the like.

The transmitting/receiving section 220 (transmission processing section 2211) may perform, for example, PDCP layer processing, RLC layer processing (e.g., RLC retransmission control), MAC layer processing (e.g., HARQ retransmission control), and the like on data, control information, and the like acquired from the control section 210, and may generate a bit string to be transmitted.

The transmitting/receiving section 220 (transmission processing section 2211) may perform transmission processing such as channel coding (which may include error correction coding), modulation, mapping, filtering processing, DFT processing (as necessary), IFFT processing, precoding, digital-to-analog conversion, and the like on the bit string to be transmitted, and may output a baseband signal.

Moreover, whether the DFT processing is applied may be based on a configuration of transform precoding. In a case where transform precoding is enabled for a channel (e.g., PUSCH), the transmitting/receiving section 220 (transmission processing section 2211) may perform the DFT processing as the transmission processing in order to transmit the channel using a DFT-s-OFDM waveform, or otherwise, may not perform the DFT processing as the transmission processing.

The transmitting/receiving section 220 (RF section 222) may perform modulation in a radio frequency range, filtering processing, amplification, and the like on the baseband signal, and may transmit a signal in the radio frequency range via the transmitting/receiving antenna 230.

On the other hand, the transmitting/receiving section 220 (RF section 222) may perform amplification, filtering processing, demodulation into a baseband signal, and the like on a signal in the radio frequency range received by the transmitting/receiving antenna 230.

The transmitting/receiving section 220 (reception processing section 2212) may apply reception processing such as analog-to-digital conversion, FFT processing, IDFT processing (as necessary), filtering processing, demapping, demodulation, decoding (which may include error correction decoding), MAC layer processing, RLC layer processing, PDCP layer processing, and the like with respect to the acquired baseband signal, and acquire user data and the like.

The transmitting/receiving section 220 (measurement section 223) may implement measurement relating to a received signal. For example, the measurement section 223 may perform RRM measurement, CSI measurement, and the like based on the received signal. The measurement section 223 may measure received power (e.g., RSRP), received quality (e.g., RSRQ, SINR, and SNR), signal strength (e.g., RSSI), propagation path information (e.g., CSI), and the like. The measurement results may be output to the control section 210.

Moreover, the measurement section 223 may derive channel measurement for CSI calculation based on a channel measurement resource. The channel measurement resource may be, for example, a non-zero power (NZP) CSI-RS resource. Further, the measurement section 223 may derive interference measurement for CSI calculation based on an interference measurement resource. The interference measurement resource may be at least one of an NZP CSI-RS resource for interference measurement, a CSI-interference measurement (IM) resource, and the like. Moreover, the CSI-IM may be referred to as CSI interference management (IM), or may be used interchangeably with zero power (ZP) CSI-RS. Moreover, in the present disclosure, the CSI-RS, the NZP CSI-RS, the ZP CSI-RS, the CSI-IM, the CSI-SSB, and the like may be used interchangeably with each other.

Moreover, in the present disclosure, a transmitting section and a receiving section of the user terminal 20 may include at least one of the transmitting/receiving section 220 and the transmitting/receiving antenna 230.

The transmitting/receiving section 220 may receive configuration information relating to a cell (second cell) with a changed physical range. The control section 210 may control transmission and reception of a signal using the cell based on the configuration information (Embodiment 0).

Each of the number of physical cell identifiers for each of the cells (second cells), the number of transmission and reception points for each of the cells, and the number of synchronization signals for each of the cells may be one or more (Embodiment 0).

The cell (second cell) may be included in a cell (first cell) with an unchanged physical range. Such cells with the unchanged physical range may be capable of overlapping with each other (Embodiment 0).

A plurality of the cells (second cells) may share at least one of an identifier of an identical synchronization signal, an identifier of an identical transmission and reception point, and an identical physical cell identifier (Embodiment 0).

The transmitting/receiving section 220 may receive information relating to an update of a cell (second cell) with a changed physical range. The control section 210 may control an operation for updating the cell based on the information (Embodiment 1).

The control section 210 may perform, as the operation, a random access procedure for an update target cell (Embodiment 1).

The control section 210 may perform, as the operation, measurement relating to the update target cell (Embodiment 1).

The control section 210 may perform, as the operation, an update or a reset of a Radio Resource Control (RRC) configuration relating to a pre-update cell (Embodiment 1).

The transmitting/receiving section 220 may perform measurement of a reference signal relating to an update of a cell with a changed physical range. The control section 210 may control an operation for updating the cell based on the measurement (Embodiment 1).

The control section 210 may perform, as the operation, a random access procedure for an update target cell (Embodiment 1).

The control section 210 may perform, as the operation, an update or a reset of a Radio Resource Control (RRC) configuration relating to a pre-update cell (Embodiment 1).

The control section 210 may determine whether an update of the cell or a beam failure has occurred based on the reference signal (Embodiment 2).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

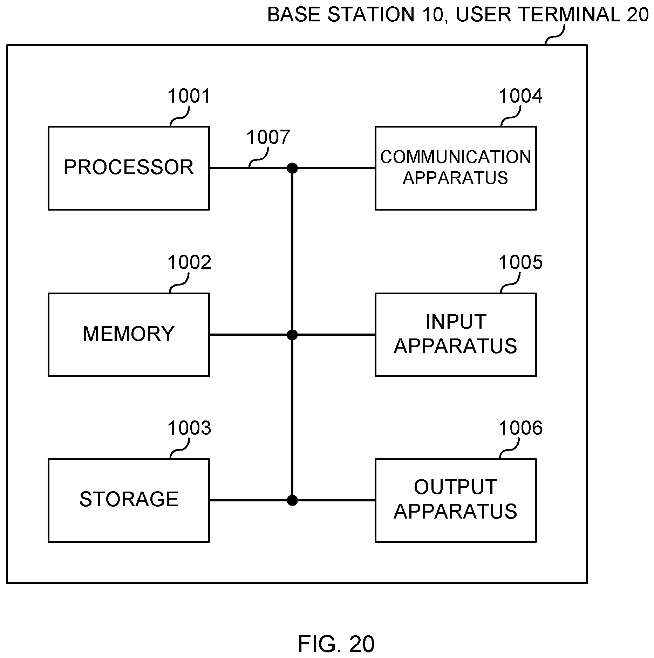

For example, a base station, a user terminal, and so on according to one embodiment of the present disclosure may function as a computer that executes the processes of the radio communication method of the present disclosure. FIG. 20 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

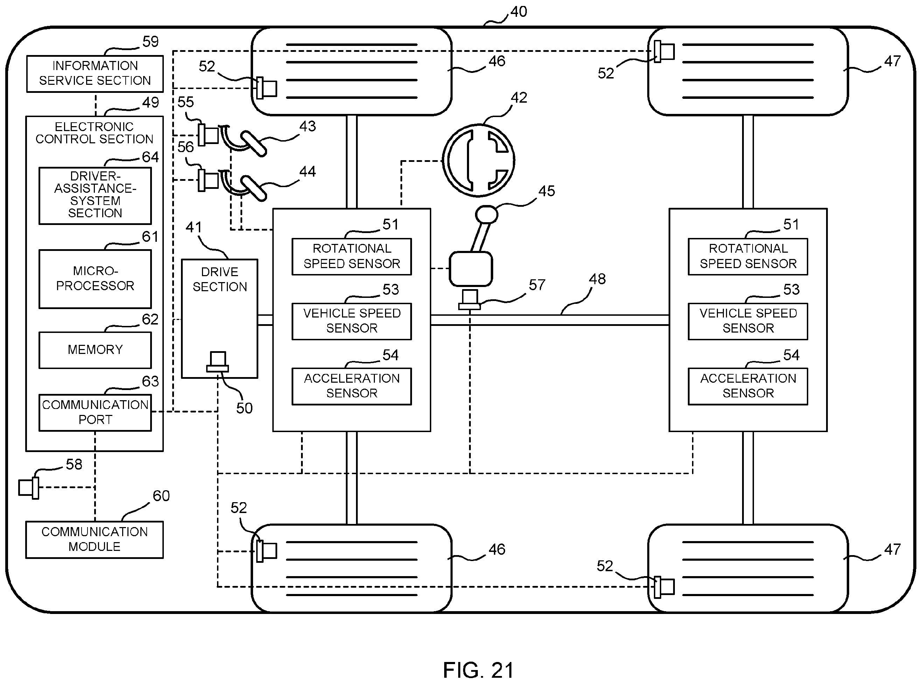

FIG. 21 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes:various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes:various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s)..." ("..." may be expressed using, for example, a that-clause, a to-infinitive, or the like) may be used interchangeably with "be expected...". "Does not expect..." may be used interchangeably with "be not expected...". Furthermore, "an apparatus A is not expected..." may be used interchangeably with "an apparatus B other than the apparatus A does not expect... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure.

## Claims

1. A terminal comprising: a receiving section configured to receive configuration information relating to a cell with a changed physical range; and
a control section configured to control transmission and reception of a signal by using the cell based on the configuration information.

2. The terminal according to claim 1, wherein a count of physical cell identifiers per cell, a count of transmission and reception points per cell, and a count of synchronization signals per cell are one or more.

3. The terminal according to claim 1, wherein the cell is included in a cell with an unchanged physical range, and
such cells with the unchanged physical range are capable of overlapping with each other.

4. The terminal according to claim 1, wherein a plurality of the cells share at least one of an identifier of an identical synchronization signal, an identifier of an identical transmission and reception point, and an identical physical cell identifier.

5. A wireless communication method for a terminal, the method comprising:
receiving configuration information relating to a cell with a changed physical range; and
controlling transmission and reception of a signal by using the cell based on the configuration information.

6. A base station comprising:
a transmitting section configured to transmit configuration information relating to a cell with a changed physical range; and
a control section configured to control transmission and reception of a signal by using the cell based on the configuration information.
